# EUROPÄISCHE PATENTSCHRIFT

(11) **EP 0 634 450 B1**
(45) Veröffentlichungstag und Bekanntmachung des Hinweises auf die Patenterteilung: **08.09.1999**
(21) Anmeldenummer: 94810400.5
(22) Anmeldetag: 05.07.1994
(51) Int. Cl.: C08K 5/3435, C08G 65/22, C08L 71/02

(54) **Polyether mit abspaltbaren gehinderten Aminen als Stabilisatoren**
Polyether with releasably bound sterically hindered amines as stabilizing agents
Polyéther contenant des amines encombrées à liaison séparable comme stabilisants

(30) Priorität: 13.07.1993 CH 210093
(43) Veröffentlichungstag der Anmeldung: 18.01.1995
(73) Patentinhaber: Ciba Specialty Chemicals Holding Inc., 4057 Basel (CH)
(72) Erfinder: Steinmann, Alfred, Dr., CH-1724 Praroman (CH)

(56) Entgegenhaltungen:
- EP-A- 0 000 769
- EP-A- 0 001 835

## Beschreibung

Die Erfindung betrifft neue Verbindungen, die durch anionische Polymerisation von Derivaten des 1 - (2,3-Epoxypropyl)-2,2,6,6-tetramethyl-piperidin oder Copolymerisation dieser Verbindungen mit anderen Epoxiden erhalten werden können, deren Verwendung als Stabilisatoren organischen Materials gegen den schädigenden Einfluß von Licht, Sauerstoff und/oder Wärme, sowie die entsprechenden stabilisierten Zusammensetzungen.

Eine Reihe von Veröffentlichungen beschreiben die Verwendung von N-Glycidylsubstituierten Polyalkylpiperidinen als Stabilisatoren für Polymere; darunter sind DE-A-2352606 (Chem. Abstr. 81, 170586k); DE-A-2365369 (Chem. Abstr. 82, 18009n); DE-A-2349962 (Chem. Abstr. 83, 60490h); US-A-3904581 (Chem. Abstr. 84, 5991t); EP-A-73386 (Chem. Abstr. 98, 199293z).

Die Publikation EP-A-001835 lehrt die weitere Umsetzung von Epoxygruppen-haltigen Piperidinen mit Dicarbonsäureanhydriden zu Polyestern.

Es besteht weiterhin Bedarf an neuen polymeren Lichtschutzmitteln mit verbesserten Gebrauchseigenschaften, welche Tetramethylpiperidin-Gruppen als Seitenketten enthalten.

Gegenstand der Erfindung sind daher zunächst Polyether enthaltend 1-100 Mol-% wiederkehrende Einheiten der Formel I 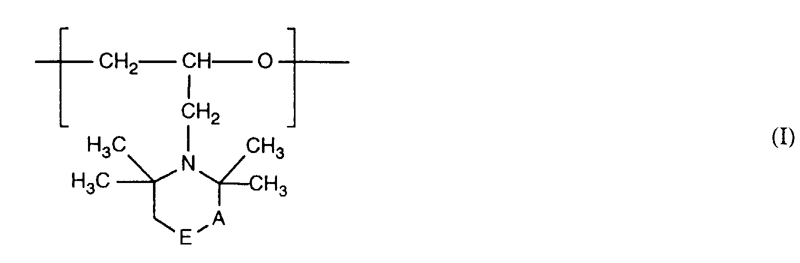 und 0-99 Mol-% strukturelle Einheiten der Formel II 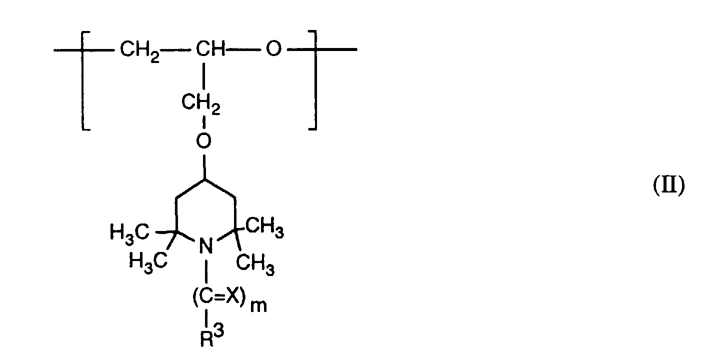 und/oder der Formel III 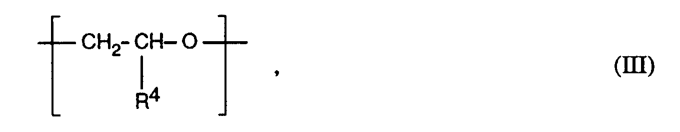 wobei die mittels Gelpermeationschromatographie gemessene Molmasse Mₙ des Homo- oder Copolymers zwischen 600 und 600 000 g/Mol beträgt und
worin m 0 oder 1 darstellt;
A -CH₂- oder-CO- bedeutet;
wenn A Methylen ist, E die Bedeutung 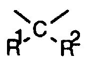 hat, und
wenn A Carbonyl ist, E die Bedeutung 〉N - R¹⁷ hat;
R¹ Wasserstoff;
R² Wasserstoff; -O-R⁵; -S-R⁵; oder-N(R¹³)R¹⁴; oder
R¹ und R² gemeinsam einen Substituenten =O bedeuten oder zusammen mit dem Kohlenstoffatom, an das sie gebunden sind, einen Fünf- oder Sechsring einer der Formeln 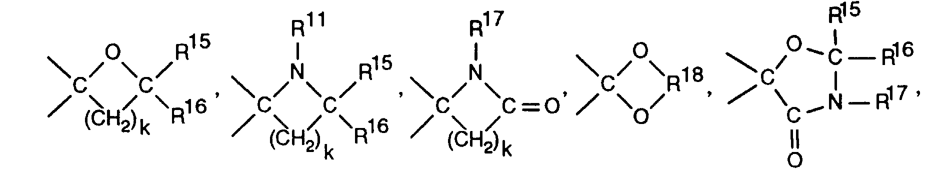 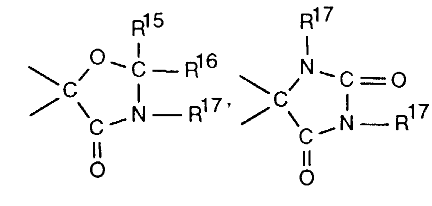 darstellen, wobei k 2 oder 3 ist;
R³ im Fall, daß m 0 oder 1 ist, C₁-C₃₆-Alkyl oder C₇-C₃₆-Aralkyl, die jeweils unsubstituiert oder durch C₅-C₈-Cycloalkyl substituiert und/oder im aliphatischen Teil durch C₅-C₈-Cycloalkylen und/oder im aliphatischen Teil durch Sauerstoff oder Schwefel oder -NR¹¹- unterbrochen und/oder im aromatischen Teil durch 1 bis 3 C₁-C₄-Alkyl- oder C₁-C₄-Alkoxyreste substituiert sind; C₅-C₁₂-Cycloalkyl, welches unsubstituiert oder durch 1 bis 4 C₁-C₄-Alkyl- und/oder C₁-C₄-Alkoxyreste substituiert ist; C₆-C₁₀-Aryl, welches unsubstituiert oder durch 1 bis 4 C₁-C₄-Alkyl- und/oder C₁-C₄-Alkoxyreste substituiert ist, bedeutet; und
R³ im Fall, daß m 0 ist, zusätzlich Wasserstoff; C₁-C₃₆-Alkoxy oder C₇-C₃₆-Aralkoxy, die jeweils unsubstituiert oder durch C₅-C₈-Cycloalkyl substituiert und/oder im aliphatischen Teil durch C₅-C₈-Cycloalkylen und/oder im aliphatischen Teil durch Sauerstoff oder Schwefel oder -NR¹¹- unterbrochen und/oder im aromatischen Teil durch 1 bis 3 C₁-C₄-Alkyl- oder C₁-C₄-Alkoxyreste substituiert sind; C₅-C₁₂-Cycloalkoxy, welches unsubstituiert oder durch 1 bis 4 C₁-C₄-Alkyl- und/oder C₁-C₄-Alkoxyreste substituiert ist; sowie C₆-C₁₀-Aryloxy, welches unsubstituiert oder durch 1 bis 4 C₁-C₄-Alkyl- und/oder C₁-C₄-Alkoxyreste substituiert ist, umfaßt;
R⁴ eine der nachstehend für R⁵ angegebenen Bedeutungen hat oder -O-R⁵,-CH₂-O-R⁵ oder Wasserstoff darstellt;
R⁵ C₁-C₅₀-Alkyl bedeutet; oder C₂-C₅₀-Alkyl bedeutet, welches durch -O-, -S- und/oder C₅-C₈-Cycloalkylen unterbrochen ist; oder R⁵ C₅-C₁₂-Cycloalkyl, welches unsubstituiert oder durch 1 bis 4 -R¹² substituiert ist; C₆-C₁₀-Aryl, welches unsubstituiert oder durch 1 bis 4 -R¹² oder -OR¹² substituiert ist; oder C₇-C₅₀-Aralkyl, welches unsubstituiert oder durch C₅-C₈-Cycloalkyl substituiert und/oder im aliphatischen Teil durch C₅-C₈-Cycloalkylen unterbrochen und/oder im aliphatischen Teil durch Sauerstoff oder Schwefel unterbrochen und/oder im aromatischen Teil durch 1 bis 4 -R¹² oder -OR¹² substituiert ist, bedeutet;
R¹¹ C₁-C₁₈-Alkyl; C₅-C₈-Cycloalkyl; Phenyl; Naphthyl; C₇-C₉-Phenylalkyl; oder
C₁₁-C₁₄-Naphthylalkyl bedeutet;
R¹² C₁-C₁₈-Alkyl; C₅-C₇-Cycloalkyl; Phenyl oder Benzyl ist;
R¹³ und R¹⁴, unabhängig voneinander, jeweils eine der für R⁵ angegebenen Bedeutungen haben; oder
R¹³ und R¹⁴ zusammen mit dem Stickstoffatom, an das sie gebunden sind, zyklisches Imid der Formel 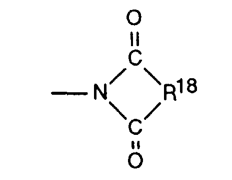 darstellen, dessen Ringstruktur 4 bis 6 Kohlenstoffatome enthält;
R¹⁵ und R¹⁶, unabhängig voneinander, H; oder C₁-C₁₂-Alkyl; oder gemeinsam geradkettiges, α,ω-verknüpftes C₄-C₁₃-Alkylen bedeuten;
R¹⁷ eine der Bedeutungen von R¹¹ hat;
R¹⁸ C₂-C₁₈-Alkylen darstellt;
und
X ein Sauerstoff- oder Schwefelatom darstellt.

Bevorzugt sind Polyether bestehend aus wiederkehrenden Einheiten der Formel I oder entsprechende Copolymere, die zwischen 1 und 100 Mol-% wiederkehrende Einheiten der Formel I enthalten und deren übrige strukturelle Einheiten der Formel II und/oder der Formel III entsprechen.

A ist vorzugsweise Methylen, E hat vorzugsweise die Bedeutung 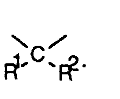 R⁵ stellt besonders bevorzugt einen langkettigen und/oder sterisch ausladenden Rest dar, beispielsweise C₆-C₃₆-Alkyl; durch -O- unterbrochenes C₆-C₃₆-Alkyl; C₅-C₉-Cycloalkyl; Phenyl; C₇-C₃₆-Phenylalkyl; oder C₇-C₃₆-Phenylalkyl, welches im aliphatischen Teil durch -O- unterbrochen ist; besonders bevorzugt ist C₆-C₁₈-Alkyl oder C₇-C₉-Phenylalkyl.

Bei der dargestellten strukturellen Einheiten der Formeln I, II und III handelt es sich um konstitutionelle Repetiereinheiten (repeating units). Die erfindungsgemäßen Polyether können dabei aus Einheiten bestehen, in denen die Reste jeweils gleiche Bedeutungen haben, oder aus unterschiedlichen Einheiten der Formel I, in denen zwei oder mehr der für m, X und/oder R¹ bis R⁵ angegebenen Bedeutungen realisiert sind. Vorzugsweise enthalten die erfindungsgemäßen Polyether gleiche Einheiten der Formeln I, II und/oder III; von besonderer Bedeutung sind Polyether aus strukturellen Einheiten der Formeln I und II, insbesondere Homopolymere bestehend aus Einheiten der Formel I.

Die erfindungsgemäßen Polyether lassen sich vorteilhaft zur Stabilisierung organischen Materials gegen den schädigenden Einfluß von Licht, Sauerstoff und/oder Wärme einsetzen.

Beispiele für die Bedeutungen von R³ sind unter anderen die folgenden:
Verzweigtes oder unverzweigtes C₁-C₃₆-Alkyl wie Methyl, Ethyl, Propyl, Isopropyl, n-Butyl, sec-Butyl, Isobutyl, t-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl, Docosyl, Pentakosyl oder Triakosyl; bevorzugt ist unverzweigtes C₁ -C₁₈-Alkyl, besonders Methyl; verzweigtes oder unverzweigtes C₁-C₃₆-Alkyloxy, insbesondere C₆-C₁₈-Alkyloxy wie Hexyloxy, Heptyloxy, Octyloxy, Nonyloxy, Decyloxy, Undecyloxy, Dodecyloxy;
durch C₅-C₈-Cycloalkyl substituiertes Alkyl oder Alkyloxy wie Cyclopentylmethyl, Cyclohexylmethyl, Cycloheptylmethyl, Cyclooctylmethyl, Cyclohexylethyl, 2-Cyclohexyl-n-propyl, 3-Cyclohexyl-n-propyl, 4-Cyclohexyl-n-butyl;
durch C₅-C₈-Cycloalkylen oder -O- unterbrochenes Alkyl oder Alkyloxy wie beispielsweise der Formeln 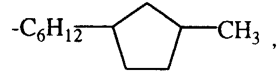 -C₂H₄-O-C₂H₄-O-C₁₂H₂₅, -(C₂H₄-O)₄-C₄H₉, -(C₂H₄-O)₆-C₄H₉;
C₅-C₈-Cycloalkyl oder C₅-C₈-Cycloalkyloxy, das unsubstituiert oder mit Alkyl substituiert ist, wie Cyclopentyl, Cyclopentyloxy, Cyclohexyl, Cyclohexyloxy, Cycloheptyl, Cycloheptyloxy, Cyclooctyl, Cyclooctyloxy, 2- oder 4-Methylcyclohexyloxy, Dimethylcyclohexyloxy, Trimethylcyclohexyl, t-Butylcyclohexyl, besonders Cyclohexyl und Cyclohexyloxy; Phenyl, Phenoxy; mit C₁-C₄-Alkyl substituiertes Phenyl oder Phenyloxy; C₇-C₁₂-Phenylalkyl oder C₇-C₁₂-Phenylalkyloxy, besonders Benzyl, Benzyloxy, Phenethyloxy, 3-Phenylpropyloxy, a-Methylbenzyl, α-Methylbenzyloxy, α,α-Dimethylbenzyl, α,α-Dimethylbenzyloxy.

Im Fall m = 0 sind solche Reste R³ bevorzugt, deren freie Valenz an einem Sauerstoffatom oder einem gesättigten Kohlenstoffatom lokalisiert ist.

R⁴ und R⁵ umfassen beispielsweise folgende Bedeutungen:
Methyl, Ethyl, Propyl, Isopropyl, n-Butyl, sec-Butyl, Isobutyl, t-Butyl, 2-Ethylbutyl, n-Pentyl, Isopentyl, 1-Methylpentyl,1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl,1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl, Docosyl, Pentakosyl, Triakosyl, Tetrakontyl; 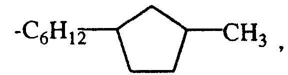 -C₂H₄-O-C₂H₄-O-C₁₂H₂₅, -(C₂H₄-O)₄-C₄H₉, -(C₂H₄-O)₆-C₄H₉;
Cyclopentyl, Cyclohexyl, Cycloheptyl, Cyclooctyl, 2- oder 4-Methylcyclohexyl, 2- oder 4-Hydroxycyclohexyl, Dimethylcyclohexyl, Trimethylcyclohexyl, t-Butylcyclohexyl; C₆-C₁₀-Aryl wie Phenyl oder Naphthyl; mit C₁-C₄-Alkyl substituiertes Phenyl; Arylalkyl oder substituiertes Arylalkyl wie Benzyl, Phenethyl, 3-Phenylpropyl, α-Methylbenzyl, α,α-Dimethylbenzyl, -C₂H₄-O-C₂H₄-O-C₁₂H₂₄-C₆H₅, -(C₂H₄-O)₄-CH₂-C₆H₅ -(C₂H₄-O)₆-C₄H₈-C₆H₅, -CH₂-C₆H₄-C(CH₃)₂-C₆H₅.

Enthalten die Reste R³, R⁴ oder R⁵ Alkyl, welches durch -O-, -S- oder -NR¹¹- unterbrochen ist, so handelt es sich um Alkyl mit mindestens 2, vorzugsweise mindestens 4 Kohlenstoffatomen, das bevorzugt durch 1-6 Gruppen -O-, -S- oder -NR¹¹- besonders durch 1-6-O- unterbrochen ist; die Heteroatome binden vorzugsweise an Kohlenstoffatome und nicht an andere Heteroatome, Strukturen der Typen -O-O- oder -NR¹¹-NR¹¹-treten nicht auf. Besonders bevorzugt stellen diese Reste Polyoxyethylenketten dar, deren Enden mit C₁-C₈-Alkyl abgesättigt sind.

Die wiederkehrenden Einheiten der Formel III leiten sich häufig von Ethylenoxid oder Glycidylverbindungen ab; R⁴ bedeutet daher neben obenstehenden Resten bevorzugt auch Wasserstoff oder Alkyloxymethyl wie Ethoxymethyl, Propyloxymethyl, Butyloxymethyl, Pentyloxymethyl, Hexyloxymethyl, Heptyloxymethyl, Octyloxymethyl, Nonyloxymethyl, Decyloxymethyl, Undecyloxymethyl, Dodecyloxymethyl, Pentadecyloxymethyl, Octadecyloxymethyl; C₆-C₁₀-Aryloxymethyl wie beispielsweise Phenyloxymethyl; C₇-C₃₆-Aryloxymethyl wie beispielsweise Benzyloxymethyl, α-Methylbenzyloxymethyl oder β-Phenylethyloxymethyl; oder C₅-C₉-Cycloalkyloxymethyl, beispielsweise Cyclohexyloxymethyl.

Die erfindungsgemäßen Polyether enthalten meist 3 bis 3000, vorzugsweise 4 bis 2000, vor allem 5 bis 1000 Einheiten der Formel I, II und/oder III, wovon mindestens 1 Mol-% Einheiten der Formel I sind. Bevorzugt sind Polyether, die mindestens 20 Mol-%, vor allem 50-100 Mol-% Einheiten der Formel I enthalten. Polyether bestehend zu 100 % aus Einheiten der Formel I bilden einen Gegenstand von besonderem Interesse. Das mittels Gelpermeationschromatographie gemessene Zahlenmittel der Molmasse Mₙ liegt allgemein zwischen 600 und 600000 g/Mol, vorzugsweise zwischen 800 und 400000 g/Mol, vor allem zwischen 1000 und 200000 g/Mol.

Sind in den erfindungsgemäßen Polyethern Einheiten der Formel II und/oder der Formel III enthalten, so sind dies bevorzugt entweder Einheiten der Formel II oder Einheiten der Formel III. Von besonderem Interesse sind darüberhinaus auch Polyether, die 1-20 Mol-%, besonders 1-10 Mol-%, Einheiten der Formel II sowie 50-98 Mol-% Einheiten der Formel III enthalten.

X steht in Formel II bevorzugt für ein Sauerstoffatom; bevorzugt ist m die Zahl 0.

Ein bevorzugter Gegenstand der Erfindung sind Polyether, worin R³ im Fall, daß m 0 oder 1 ist, C₁-C₃₆-Alkyl; durch -O- unterbroches C₂-C₃₆-Alkyl; C₇-C₃₆-Aralkyl; im aliphatischen Teil durch -O- unterbrochenes und/oder im aromatischen Teil durch 1 bis 3 C₁-C₄-Alkyl- oder C₁-C₄-Alkoxyreste substituieres C₇-C₃₆-Aralkyl; C₅-C₉-Cycloalkyl, welches unsubstituiert oder durch 1 bis 3 C₁-C₄-Alkyl- und/oder C₁-C₄-Alkoxyreste substituiert ist; Phenyl, welches unsubstituiert oder durch 1 bis 4 C₁-C₄-Alkyl- und/oder C₁-C₄-Alkoxyreste substituiert ist, bedeutet; und R³ im Fall, daß m 0 ist, zusätzlich C₁-C₃₆-Alkoxy; durch -O- unterbrochenes C₂-C₃₆-Alkoxy; C₇-C₃₆-Aralkoxy; im aliphatischen Teil durch -O- unterbrochenes und/oder im aromatischen Teil durch 1 bis 3 C₁-C₄-Alkyl- oder C₁-C₄-Alkoxyreste substituieres C₇-C₃₆-Aralkoxy;C₅-C₉-Cycloalkoxy, welches unsubstituiert oder durch 1 bis 3 C₁-C₄-Alkyl- und/oder C₁-C₄-Alkoxyreste substituiert ist; sowie Phenyloxy, welches unsubstituiert oder durch 1 bis 4 C₁-C₄-Alkyl- und/oder C₁-C₄-Alkoxyreste substituiert ist, umfaßt;
R⁵ C₁-C₅₀-Alkyl;C₂-C₅₀-Alkyl, welches durch -O- unterbrochen ist; C₅-C₉-Cycloalkyl, welches unsubstituiert oder durch R¹² substituiert ist; Phenyl, welches unsubstituiert oder durch 1 bis 3 -R¹² oder -OR¹² substituiert ist; oder C₇-C₅₀-Phenylalkyl, welches unsubstituiert oder im aromatischen Teil durch 1 bis 3 -R¹² oder -OR¹² substituiert und/oder im aliphatischen Teil durch -O- unterbrochen ist, bedeutet;
R¹¹ C₁-C₁₈-Alkyl; C₅-C₈-Cycloalkyl; Phenyl oder C₇-C₉-Phenylalkyl bedeutet; und X ein Sauerstoffatom darstellt.

Darunter sind solche Polyether bevorzugt, worin
A Methylen und E 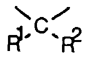 ist;
R¹ Wasserstoff; und
R² -O-R⁵ bedeutet;
R³ im Fall, daß m 0 oder 1 ist, C₁-C₁₈-Alkyl; oder C₇-C₁₈-Phenylalkyl, die jeweils unsubstituiert oder am Phenylring durch 1 bis 3 C₁-C₄-Alkylreste substituiert sind; C₅-C₉-Cycloalkyl; Phenyl, welches unsubstituiert oder durch 1 bis 3 Reste C₁-C₄-Alkyl substituiert ist, bedeutet; und
R³ im Fall, daß m 0 ist, zusätzlich C₄-C₃₆-Alkoxy oder C₇-C₁₈-Phenylalkoxy, die jeweils unsubstituiert oder am Phenylring durch 1 bis 3 C₁-C₄-Alkylreste substituiert sind; C₅-C₉-Cycloalkoxy; Phenyloxy, welches unsubstituiert oder durch 1 bis 3 Reste C₁-C₄-Alkyl substituiert ist, umfaßt; und
R⁵ C₆-C₃₆-Alkyl; durch -O- unterbrochenes C₆-C₃₆-Alkyl; C₅-C₉-Cycloalkyl; Phenyl; C₇-C₃₆-Phenylalkyl; oder C₇-C₃₆-Phenylalkyl, welches im aliphatischen Teil durch -O- unterbrochen ist, bedeutet.

Einen besonders bevorzugten Gegenstand der Erfindung bilden Polyether, worin m 0 ist; und
R⁵ C₆-C₁₈-Alkyl; C₅-C₉-Cycloalkyl; Phenyl; oder C₇-C₉-Phenylalkyl bedeutet.

Die Herstellung der erfindungsgemäßen Polyether erfolgt zweckmäßig dadurch, daß man Epoxide der Formel Ia 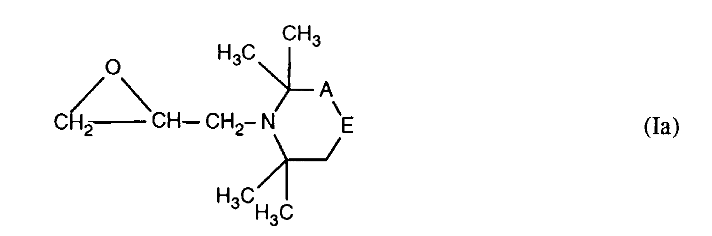 und gegebenenfalls der Formel IIa 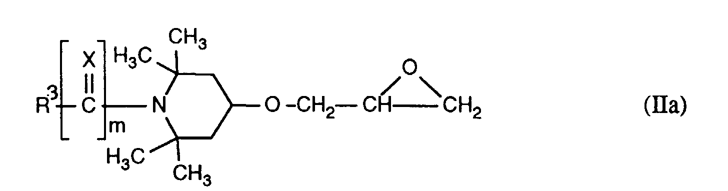 und/oder der Formel IIIa 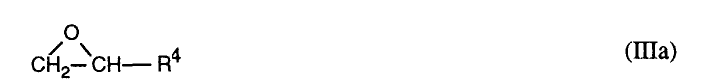 worin R¹ bis R⁴, X und m die oben angegebenen Bedeutungen haben, allein oder als Gemisch, in an sich bekannter Weise anionisch polymerisiert.

Die Polymerisation kann beispielsweise nach einer der in der von K.C. Frisch und S.L. Reegen herausgegebenen Publikation beschriebenen Methoden ausgeführt werden (Frisch/Reegen: Ring-Opening Polymerization, Marcel Dekker, New York 1969). Die Polymerisation wird in der Regel durch einen der üblichen Initiatoren der anionischen Polymerisation eingeleitet. Dazu zählen basische metallorganische Verbindungen wie Grignard-Verbindungen, beispielsweise vom Typ CI-Mg-C₁-C₁₂-Alkyl oder Cl-Mg-C₆-C₁₂-Aryl, Alkalialkyle, beispielsweise C₁-C₆-Alkalialkyle wie Kalium-tert.-butylat, Alkalialkoholate Me-OR', worin Me beispielsweise Li, Na, K, und R' C₁-C₆-Alkyl ist, wie z.B. Natrium- oder Kaliummethanolat, Natrium- oder Kalium-tert.-butylat, Lithium- oder Natriumethanolat, Hydroxide oder Amide wie beispielsweise NaOH, KOH, Na-Amid, Lithiumamid.

Der Initiator wird zweckmäßig in einer Menge von 0,1-10 Mol-%, vorzugsweise 1-5 Mol-%, zugesetzt, bezogen auf die Menge an Epoxid.

Der Mischung wird bevorzugt ein Kronenether wie 18-Krone-6 (18-Crown-6) oder 15-Krone-5 (15-Crown-5) zugesetzt, zweckmäßig in einer Menge von 0,1-10 Mol-%, vorzugsweise 1-5 Mol-%, bezogen auf die Menge an Epoxid.

Die Polymerisation wird bevorzugt ohne Lösemittel durchgeführt; die Verwendung eines Lösemittels ist jedoch möglich. Die Reaktionstemperatur ist nicht kritisch; sie bewegt sich im allgemeinen im Bereich von 10 bis 200°C.

Gegebenenfalls anwesende Lösemittel müssen unter den Reaktionsbedingungen inert sein. Als Lösemittel kommen u.a. aromatische und/oder aliphatische Kohlenwasserstoffe und Ether in Betracht. Bevorzugt sind hochsiedende Lösemittel, beispielsweise solche, deren Siedetemperatur bei Normaldruck im Bereich 80-150°C liegt. Beispiele für verwendbare Lösemittel sind Benzol, Toluol, Xylol, Ethylbenzol, Isopropylbenzol, Cyclohexan, Diethylether, Dibutylether, Tetrahydrofuran oder Dioxan.

Die Polymerisation wird zweckmäßig unter Ausschluß von Sauerstoff durchgeführt, beispielsweise unter Argon oder unter Stickstoff, sowie unter Ausschluß von Wasser.

Nach vollständiger Polymerisation kann die Aufarbeitung nach gängigen Methoden erfolgen; zweckmäßig wird die Mischung zunächst mit einem geeigneten Lösemittel, beispielsweise Tetrahydrofuran, verdünnt. Die Lösung kann durch Filtration, gegebenenfalls nach Dispergieren von Aktivkohle, gereinigt werden. Aus der Lösung läßt sich das Polymer mit Hilfe eines weiteren Lösemittels geeigneter Polarität, beispielsweise Acetonitril oder einem niederen Alkohol, ausfällen; dies kann durch Eintragen der Polymerlösung in eine größere Menge des Fällungsmittels geschehen. Die Reinigung durch Fällung kann bei Bedarf mehrfach wiederholt werden.

Von den gewählten Polymerisationsbedingungen hängt ab, welche Endgruppen die erfindungsgemäßen Polyether der Formel I aufweisen. Die terminalen Kohlenstoffatome der Polyetherkette können beispielsweise durch -H oder -OH oder einen Rest der als Initiator verwendeten Verbindung abgesättigt sein. Wird als Initiator beispielsweise, wie oben beschrieben, ein Alkoholat R'O⁻ eingesetzt und im Anschluß an die Polymerisation mit einem protischen Lösemittel aufgearbeitet, können häufig die Endgruppen -OR' und -OH an den terminalen Kohlenstoffatomen auftreten.

Prinzipiell ist die Art der Endgruppe für die Wirkung der erfindungsgemäßen Polyether als Stabilisator jedoch von untergeordneter Bedeutung.

Ein Verfahren zur Herstellung einer Verbindung der Formel Ia geht von einer Piperidinverbindung der Formel Ib 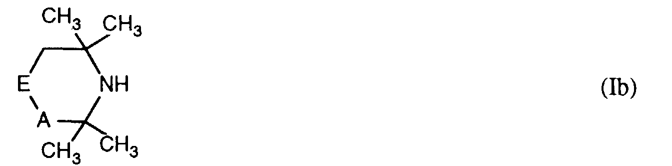 aus. Piperidinverbindungen dieser Art sind bekannt und zum Teil kommerziell erhältlich.

Zur Herstellung einer Verbindung der Formel Ia kann die Piperidinverbindung der Formel Ib in an sich bekannter Weise unter Abspaltung von HCl mit Epichlorhydrin umgesetzt werden.

Die Umsetzung kann in Analogie zu einer der Methoden erfolgen, die in der EP-A-001835 oder bei Luston und Vass, Makromol. Chem., Macromol. Symp. 27, 231 (1989), beschrieben sind. Zweckmäßig wird die Piperidinverbindung der Formel Ib in Gegenwart starker Basen, beispielsweise wässriger konzentrierter Alkalihydroxidlösung, langsam mit einem Überschuß Epichlorhydrin versetzt. Bei der Reaktion kann zusätzlich ein organisches Lösemittel eingesetzt werden.

Vorteilhaft wird die Base in ca. 1,1-20-fachem molarem Überschuß bezogen auf die Verbindung der Formel Ib eingesetzt; beispielsweise werden 1,1-15 Mol, bevorzugt 1,2-12 Mol Natrium- oder Kaliumhydroxid als 50-% wässrige Lösung pro Mol Piperidinverbindung verwendet. Wird ein organisches Lösemittel eingesetzt, so wird dessen Menge zweckmäßig so bemessen, daß die Verbindung der Formel Ib vollständig gelöst wird; als Lösemittel eignen sich beispielsweise wenig bis unpolare Lösemittel wie Kohlenwasserstoffe oder Ether; bevorzugt ist Toluol.

Auf ein Äquivalent der Piperidinverbindung der Formel Ib können beispielsweise 1-4, vorzugsweise 1,2-3, vor allem 1,5-2,5 Äquivalente Epichlorhydrin eingesetzt werden. Darüberhinaus können der Mischung vorteilhaft 1-30 Mol-%, bevorzugt 5-25 Mol-%, eines tert. Aminsalzes, beispielsweise eines Tetraalkylammoniumhalogenids wie Tetramethylammoniumchlorid oder Tetrabutylammoniumbromid, oder eines Phosphoniumsalzes, beispielsweise eines quaternären Phosphoniumhalogenids wie Ethyltriphenylphosphoniumbromid, als Phasentransferkatalysator zugesetzt werden.

Die Temperatur kann während der Reaktion im Bereich von 0 bis 200°C liegen, zweckmäßig beträgt die Temperatur 20-160°C, vor allem 40-140°C.

Die Temperatur der Reaktionsmischung kann für die Dauer der Reaktion im Siedebereich gehalten werden (Rückfluß). Dazu wird eine Lösemittel enthaltende Reaktionsmischung, im Allgemeinen unter Normaldruck, zum Siedepunkt erwärmt und das verdampfte Lösemittel mit Hilfe eines geeigneten Kühlers kondensiert und wieder der Reaktionsmischung zugeführt.

Nach vollständiger Reaktion kann die Aufarbeitung nach gängigen Methoden erfolgen; zweckmäßig wird die Mischung zunächst mit Wasser verdünnt, beispielsweise indem das Reaktionsgemisch in das 1-4-fache Volumen Eiswasser gegeben wird; anschließend kann die organische Phase direkt abgetrennt oder extrahiert werden, zur Extraktion eignet sich z.B. Essigester oder Ether. Das Produkt kann nach Trocknen der organischen Phase durch Entfernen des Lösemittels isoliert werden. Möglich sind auch das Einschalten weiterer Reinigungsschritte wie beispielsweise Waschen mit wässriger NaCl-Lösung, Dispergieren von Aktivkohle, Filtrieren und/oder Destillieren.

Verbindungen der Formel Ia lassen sich weiterhin durch Oxidation der entsprechenden N-Allylverbindungen mit Hilfe von Persäuren, beispielsweise Peressigsäure, erhalten. Die weitere Umsetzung zu den erfindungsgemäßen Polyethern kann erfolgen wie oben beschrieben.

Ein Verfahren zur Herstellung einer Verbindung der Formel IIa geht von einer Piperidinverbindung der Formel IIb 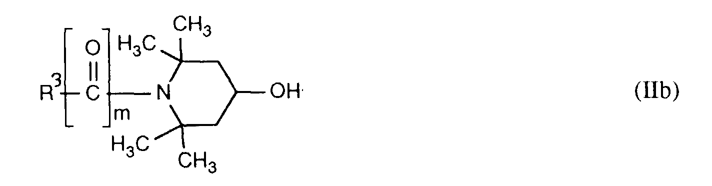 aus. Piperidinverbindungen dieser Art sind bekannt und zum Teil kommerziell erhältlich.

Zur Herstellung einer Verbindung der Formel IIa wird die Piperidinverbindung der Formel IIb zweckmäßig mit Epichlorhydrin umgesetzt.

Die Herstellung des Epoxides der Formel IIa kann entsprechend oder in Analogie zu einer der Methoden erfolgen, die in der EP-A-001835 oder bei Luston und Vass, Makromol. Chem., Macromol. Symp. 27, 231 (1989), beschrieben sind. Zweckmäßig wird die Piperidinverbindung der Formel IIb in Gegenwart starker Basen, beispielsweise wässriger konzentrierter Alkalihydroxidlösung, und eines organischen Lösemittels langsam mit einem Überschuß Epichlorhydrin versetzt.

Vorteilhaft wird die Base in ca. 2-20-fachem molarem Überschuß bezogen auf die Verbindung der Formel IIb eingesetzt; beispielsweise werden 3-15 Mol, bevorzugt 4-12 Mol Natrium- oder Kaliumhydroxid als 50-% wässrige Lösung pro Mol Piperidinverbindung verwendet. Die Menge des organischen Lösemittels wird zweckmäßig so bemessen, daß die Verbindung der Formel IIb vollständig gelöst wird; als Lösemittel eignen sich beispielsweise wenig bis unpolare Lösemittel wie Kohlenwasserstoffe oder Ether; bevorzugt ist Toluol.

Auf ein Äquivalent der Piperidinverbindung der Formel IIb können beispielsweise 14, vorzugsweise 1,2-3, vor allem 1,5-2,5 Äquivalente Epichlorhydrin eingesetzt werden. Darüberhinaus können der Mischung vorteilhaft 1-30 Mol-%, bevorzugt 5-25 Mol-%, eines tert. Aminsalzes, beispielsweise eines Tetraalkylammoniumhalogenids wie Tetramethylammoniumchlorid oder Tetrabutylammoniumbromid, oder eines Phosphoniumsalzes, beispielsweise eines quaternären Phosphoniumhalogenids wie Ethyltriphenylphosphoniumbromid, als Katalysator zugesetzt werden.

Die Temperatur beträgt während der Reaktion zweckmäßig 0-100°C, vorzugsweise 20-80°C, vor allem 30-70°C.

Die Reaktion wird vorzugsweise unter Schutzgas, z.B. Stickstoff oder Argon, durchgeführt; die Reaktionsmischung wird zweckmäßig gerührt.

Nach vollständiger Reaktion kann die Aufarbeitung nach gängigen Methoden erfolgen; zweckmäßig wird die Mischung zunächst mit Wasser verdünnt, beispielsweise indem das Reaktionsgemisch in das 1-4-fache Volumen Eiswasser gegeben wird; anschließend kann die organische Phase direkt abgetrennt oder extrahiert werden, zur Extraktion eignet sich z.B. Essigester. Das Produkt kann nach Trocknen der organischen Phase durch Entfernen des Lösemittels isoliert werden. Möglich sind auch das Einschalten weiterer Reinigungsschritte wie Dispergieren von Aktivkohle, Filtrieren oder Destillieren.

Die Verbindungen der Formel IIIa sind bekannt.

Die erfindungsgemäßen Polyether eignen sich zum Stabilisieren von organischen Materialien gegen thermischen, oxidativen und aktinischen Abbau, beispielsweise zum Stabilisieren der folgenden organischen Polymere:
1. Polymere von Mono- und Diolefinen, beispielsweise Polypropylen, Polyisobutylen, Polybuten- 1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten- 1 -Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere , LLDPE/Ethylen-Vinylacetat-Copolymere, LLDPE/Ethylen-Acrylsäure -C opoiymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid,Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Weitere Gegenstände der Erfindung sind daher Zusammensetzungen enthaltend (a) ein gegen Schädigung durch Licht, Sauerstoff und/oder Wärme empfindliches organisches Material, insbesondere ein organisches Polymer, und (b) als Stabilisator einen Polyether enthaltend wiederkehrende Einheiten der Formel I, sowie die Verwendung der genannten Polyether zum Stabilisieren von organischem Material, insbesondere organischen Polymeren, gegen Schädigung durch Licht, Sauerstoff und/oder Wärme.

Die Erfindung umfaßt ebenfalls ein Verfahren zum Stabilisieren organischen Materials, insbesondere organischer Polymere, gegen Schädigung durch Licht, Sauerstoff und/oder Wärme, dadurch gekennzeichnet, daß man den Polymeren als Stabilisator einen Polyether enthaltend wiederkehrende Einheiten der Formel I beimischt.

Von besonderem Interesse ist die Verwendung der erfindungsgemäßen Polyether als Stabilisatoren für synthetische organische Polymere, insbesondere Thermoplaste, beispielsweise Polyolefine.

Vorzugsweise handelt es sich bei den zu schützenden organischen Materialien um natürliche, halbsynthetische oder bevorzugt synthetische organische Polymere. Besonders bevorzugt sind synthetische organische Polymere oder Gemische solcher Polymere, insbesondere thermoplastische Polymere wie Polyolefine, vor allem Polyethylen und Polypropylen (PP). Ebenfalls besonders bevorzugte organische Materialien sind photographische Materialien oder Überzugszusammensetzungen. Unter photographischen Materialien sind insbesondere die Materialien zu verstehen, die in Research Disclosure 1990, 31429 (Seiten 474-480) für die photographische Reproduktion und andere Reproduktionstechniken beschrieben sind. Im Sinne der Erfindung vorteilhaft zu stabilisierende Überzugszusammensetzungen sind beispielsweise beschrieben in Ullmann's Encyclopedia of Industrial Chemistry, 5. Ed., Vol. A18, pp. 359-464, VCH Verlagsgesellschaft, Weinheim 1991.
Zusammensetzungen, worin die zu schützende Komponente (a) ein Polyolefin, ein photographisches Material oder ein Lackbindemittel auf der Basis von Acryl-, Alkyd-, Polyurethan-, Polyester- oder Polyamidharz oder entsprechender modifizierter Harze ist, stellen daher einen besonders bevorzugten Gegenstand der Erfindung dar.

Allgemein werden die erfindungsgemäßen Polyether dem zu stabilisierenden Material in Mengen von 0,01 bis 10 %, bevorzugt 0,01 bis 5 %, insbesondere 0,01 bis 2 %, bezogen auf das Gesamtgewicht der stabilisierten Zusammensetzung, zugesetzt. Besonders bevorzugt ist der Einsatz der erfindungsgemäßen Verbindungen in Mengen von 0,05 bis 1,5 %, vor allem 0,1 bis 1,5 %.

Dabei machen die wiederkehrenden Einheiten der Formeln I und II bevorzugt 0,01 bis 5 %, insbesondere 0,01 bis 2 %, vor allem 0,05 bis 1,5 % des Gesamtgewichtes der stabilisierten Zusammensetzung aus.

Die Einarbeitung in die zu stabilisierenden Materialien kann beispielsweise durch Einmischen oder Aufbringen der erfindungsgemäßen Polyether und gegebenenfalls weiterer Additive nach den in der Technik üblichen Methoden erfolgen. Beispielsweise kann die Einarbeitung in die zu schützenden Polymere vor oder während der Formgebung, oder durch Aufbringen der gelösten oder dispergierten Verbindung auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der erfindungsgemäßen Polyether besteht in deren Zugabe vor, während oder unmittelbar nach der Polymerisation der entsprechenden Monomeren bzw. vor der Vernetzung. Die erfindungsgemäßen Polyether können dabei als solche, aber auch in encapsulierter Form (z.B in Wachsen, Ölen oder Polymeren) zugesetzt werden. Im Falle der Zugabe vor oder während der Polymerisation können die erfindungsgemäßen Polyether auch als Regulator für die Kettenlänge der Polymere (Kettenabbrecher) wirken.

Die erfindungsgemäßen Polyether können auch in Form eines Masterbatches, der diese Verbindung beispielsweise in einer Konzentration von 2,5 bis 25 Gew.-% enthält, den zu stabilisierenden Kunststoffen zugesetzt werden.

Zweckmäßig kann die Einarbeitung der erfindungsgemäßen Polymere oder Copolymere nach folgenden Methoden erfolgen:
- als Emulsion oder Dispersion (z.B. zu Latices oder Emulsionspolymeren),
- als Trockenmischung während des Vermischens von Zusatzkomponenten oder Polymermischungen,
- durch direktes Zugeben in die Verarbeitungsapparatur (z.B. Extruder, Innenmischer usw.),
- als Lösung oder Schmelze.

Erfindungsgemäße Polymerzusammensetzungen können in verschiedener Form angewendet bzw. zu verschiedenen Produkten verarbeitet werden, z.B. als (zu) Folien, Fasern, Bändchen, Formmassen, Profilen, oder als Bindemittel für Lacke, Klebstoffe oder Kitte.

Neben den erfindungsgemäßen Polymeren oder Copolymeren können die erfindungsgemäßen Zusammensetzungen zusätzlich herkömmliche Additive enthalten, wie beispielsweise die unten angegebenen.

Die herkömmlichen Additive werden zweckmäßig in Mengen von 0,1-10, beispielsweise 0,2-5 Gew.-%, bezogen auf das zu stabilisierende Polymer, eingesetzt.

### 1. Antioxidantien

1.1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-( 1'-methyl-heptadec-1'-yl)-phenol, 2,4-Dimethyl-6-(1'-methyl-tridec-1'-yl)-phenol und Mischungen davon.
1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecyl-thiomethyl-4-nonylphenol.
1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
1.4. Tocopherole, z.B. α-Tocopherol, β-Tocopherol, γ-Tocopherol, δ-Tocopherol und Mischungen davon (Vitamin E).
1.5. Hydroxylierte Thiodiphenylether, z.B. 2,2'-Thio-bis-(6-tert-butyl-4-methylphenol), 2,2'-Thio-bis-(4-octylphenol),4,4'-Thio-bis-(6-tert-butyl-3-methylphenol), 4,4'-Thio-bis-(6-tert-butyl-2-methylphenol),4,4'-Thio-bis-(3,6-di-sec.-amylphenol), 4,4'-Bis-(2,6-dimethyl-4-hydroxyphenyl) -disulfid.
1.6. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol] 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol),1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien,Bis-[2-(3'-tert-butyl-2'-hydroxy-5'-methyl-benzyl)-6-tert-butyl-4-methyl-phenyl] -terephthalat, 1,1-Bis-(3,5-dimethyl-2-hydroxyphenyl)-butan, 2,2-Bis-(3,5-di-tert-butyl-4-hydroxy-phenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.
1.8. Hydroxybenzylierte Malonate, z. B.Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis-(3,5-di-tert-butyl-4-hydroxybenzyl)-malonat, Di-[4-(1,1,3,3-tetramethylbutyl)-phenyl] -2,2-bis-(3,5-di-tert-butyl-4-hydroxybenzyl)-malonat
1.9. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
1.10. Triazinverbindungen, z.B.2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)- 1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin,1,3,5-Tris-(3,5-dicyclohexyl-4-hydroxybenzyl)-isocyanurat.
1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
1.13. Ester der β-(3,5-Di-tert-butyl-4-hydroxphenyl)-propionsäure mit ein- oder mehr wertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.14. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol,1,9-Nonandiol, Ethylenglycol,1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.15. Ester der β-(3,5-Dicyclohexyl-4-hydroxyphenyl)-propionsäure mit ein- oder mehr wertigen Alkoholen, wie z.B. mit Methanol, Ethanol, Octanol, Octadecanol, 1,6-Hexandiol, 1,9-Nonandiol, Ethylenglycol,1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.17. Amide der β-(3,5-Di-tert-butyl-4-hydroxyphenyl)-propionsäure, wie z.B. N,N'-Bis- (3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

### 2. UV-Absorber und Lichtschutzmittel

2.1.2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol,2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol,2-(3'-sec-Butyl-5'-tert-butyl-2'-hydroxyphenyl)-benzotriazol, 2-(2'-Hydroxy-4'-octoxyphenyl)-benzotriazol 2-(3'5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)-phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 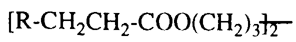 mit R = 3'-tert-Butyl-4'-hydroxy-5'-2H-benzotriazol-2-yl-phenyl.
2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat,1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
2.7. Oxalsäurediamide, wie z.B. 4,4'-Di-octyloxy-oxanilid, 2,2'-Diethoxy-oxanilid, 2,2'-Di-octyloxy-5,5' -di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2- (2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid,N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit,6-Isooctyloxy-2,4,8,10-tetra-tert-butyl-12H-dibenz[d,g]-1,3,2-dioxaphosphocin,6-Fluor- 2,4,8,10-tetra-tert-butyl-12-methyl-di-benz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
8. Nukleierungsmittel, wie z.B. 4-tert-Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.
10. Sonstige Zusätze, wie z.B. Weichmacher, Gleitmittel, Emulgatoren, Pigmente, Optische Aufheller, Flammschutzmittel, Antistatika, Treibmittel.
11. Benzofuranone bzw. Indolinone, wie z.B. in US-A4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis-[5,7-di-tert-butyl-3-(4-[2-hydroxyethoxy]-phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Die nachfolgenden Beispiele illustrieren die Erfindung weiter. Alle Angaben in Teilen oder Prozenten, in den Beispielen ebenso wie in der übrigen Beschreibung sowie in den Patentansprüchen, beziehen sich auf das Gewicht, sofern nichts anderes angegeben ist. In den Beispielen werden die folgenden Abkürzungen verwendet:
GC: Gaschromatographie;
GPC: Gelpermeationschromatographie;
DSC: Differential-Scan Calorimetrie;
THF: Tetrahydrofuran;
Mₙ: Zahlenmittel der Molmasse (Einheit g/Mol);
M_{w}: Massenmittel der Molmasse (Einheit g/Mol);
T_{G}: Glastemperatur.

### Herstellungsbeispiele

### A) Herstellung der Monomeren

### A1) Herstellung von 1-(2,3-Epoxypropyl)-4-octyloxy-2,2,6,6-tetramethylpiperidin

### A1a) 4-Octyloxy-2,2,6,6-tetramethylpiperidin

In einem 2,5 l Sulfierkolben, ausgerüstet mit Glasrührer, Kühler, Thermometer und Tropfrichter werden unter Stickstoff 314,6 g (2 Mol) 4-Hydroxy-2,2,6,6-tetramethylpiperidin, 1400 ml Toluol, 100 g Polyethylenglykol 1000 und 561 g (10 Mol) pulverisiertes Kaliumhydroxyd vorgelegt. Man erwärmt auf 80°C, wobei die Suspension in eine Lösung übergeht. Anschließend tropft man innerhalb einer Stunde 424,8 g (2,2 Mol) 1-Bromoktan zu und lässt 12 Stunden bei 80°C rühren, kühlt dann auf 30°C ab und giesst auf Eis.
Nach Extraktion mit Essigester wird die organische Phase zweimal mit Wasser gewaschen, über Natriumsulfat getrocknet und eingedampft.
Der Rückstand wird bei 120°C/0,02 Torr destilliert. Man erhält 308 g einer klaren Flüssigkeit, Reinheit (GC) > 97 %.

| Mikroanalyse | | |
|---|---|---|
| | berechnet | gefunden |
| % C | 75.77 | 75.66 |
| % H | 13.09 | 13.38 |
| % N | 5.19 | 4.81 |
| % Br | 0.00 | 0.00 |

¹H-NMR (CDCl₃):
0,79-1.05 ppm (5 H,m): CH₃-CH₂-
1,14 und 1,18 ppm (12 H, s): CH₃ (Piperidin)
1,23-1,39 ppm (10 H, m): 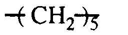 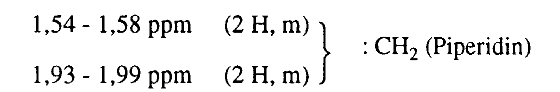 3,44-3,48 ppm (2 H, t): -O-CH₂(Octylrest)
3,61-3,70 ppm (1 H, m): CH (Piperidin)

### A1b)1-(2,3-Epoxypropyl)-4-octyloxy-2,2,6,6-tetramethylpiperidin

In einem 1,5 l Sulfierkolben mit Kühler, Glasrührer, Tropfrichter und Thermometer werden 269,5 g (1 mol) der unter A1a) hergestellten Substanz, 1100 ml Epichlorhydrin und 11 g Tetramethylammoniumchlorid vorgelegt. In den Tropfrichter gibt man eine Lösung aus 48 g (1,2 mol) Natriumhydroxid und 48 ml Wasser.
Der Kolbeninhalt wird auf 100°C erwärmt und die Natronlauge in 30 Minuten zugetropft. Danach lässt man bei 130°C für 16 Stunden rühren. Nach dem Abkühlen giesst man auf Eiswasser und extrahiert mit Diethylether. Die organische Phase wird dreimal mit Natriumchloridlösung gewaschen, über Natriumsulfat getrocknet und bei 60°C am Rotationsverdampfer unter Vakuum eingeengt.
Der Rückstand wird über eine Vigreuxkolonne destilliert: Siedepunkt 136°C bei 0,02 Torr. Man erhält 238 g (73 %) einer klaren Flüssigkeit.

| Mikroanalyse | | |
|---|---|---|
| | berechnet | gefunden |
| % C | 73.79 | 73.60 |
| % H | 12.08 | 12.25 |
| % N | 4.30 | 4.35 |

¹H-NMR(CDCl₃):
0,85-0.90 ppm (3 H,m): CH₃ (Octylether)
1,01, 1,11, 1,20 ppm (12 H, s): CH₃ (Piperidin)
1,28-1,38 ppm (12 H, m): 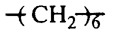 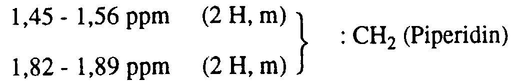 2,50-2,91 ppm (5 H, m): 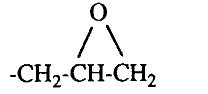 3,42-3,46 ppm (2 H, t): -O-CH₂(Octylether)
3,50-3,60 ppm (1 H, m): CH (Piperidin)

### A2) Herstellung von1-(2,3-Epoxypropyl)-4-benzyloxy-2,2,6,6-tetramethylpiperidin

### A2a) Herstellung von 4-Benzyloxy-2,2,6,6-tetramethylpiperidin

In einem 5 l Planschliffgefäss mit Ankerrührer, Thermometer, Kühler und Tropfrichter werden unter Stickstoff 471,9 g (3 Mol) 4-Hydroxy-2,2,6,6-tetramethylpiperidin, 2,1 l Toluol, 150 g Polyethylenglykol 1000 und 841,5 g (15 Mol) pulverisiertes Kaliumhydroxyd vorgelegt.
Die Mischung wird auf 80°C erwärmt. Zur Lösung tropft man 564,3 g (3,3 Mol) Benzylbromid während 1 Stunde. Nach 24 Stunden bei 80°C lässt man abkühlen und giesst auf Eiswasser. Die organische Phase wird abgetrennt und dreimal mit 10 % Salzsäure extrahiert. Die Wasserphase wird mit 10 % Natronlauge basisch gestellt und dreimal mit Essigester extrahiert. Die Essigesterphasen werden vereinigt und anschliessend getrocknet und eingeengt.
Der Rückstand wird bei 90°C/0,01 Torr destilliert. Man erhält 487 g (66 %) einer klaren Flüssigkeit, die beim Abkühlen kristallisiert.
Eine Probe wird in n-Hexan umkristallisiert; Schmelzpunkt 30°C.

| Mikroanalyse | | |
|---|---|---|
| | berechnet | gefunden |
| % C | 77.68 | 77.52 |
| % H | 10.19 | 10.29 |
| %N | 5.66 | 5.60 |

¹H-NMR (CDCl₃):
0,71 ppm (1 H,s): NH 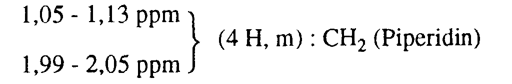 1,15 ppm und 1,17 ppm (12 H, s): CH₃
3,76-3,86 ppm (1 H, m): CH
7,26-7,35 ppm (5 H, m): Aromat

### A2b) Herstellung von 1-(2,3-Epoxypropyl)4-benzyloxy-2,2,6,6-tetramethylpiperidin

In einem 1,5 l Sulfierkolben mit Thermometer, Glasrührer und Tropfrichter werden 400 ml Epichlorhydrin, 100 g der unter A2a) hergestellten Substanz und 5 g Tetramethylammoniumchlorid vorgelegt. Man erhitzt auf 100°C und tropft eine Lösung aus 18 g (450 mmol) Natriumhydroxid, gelöst in 18 g Wasser, innerhalb 30 Minuten dazu. Danach erhitzt man auf 117°C und lässt 15 Stunden rühren. Nach dem Abkühlen giesst man auf Eis und extrahiert mit Diethylether. Die organische Phase wird mit Kochsalzlösung gewaschen, getrocknet und eingedampft.
Der Rückstand wird über eine isolierte Vigreuxkolonne destilliert. Man erhält 82 g (67 %) einer klaren Flüssigkeit, die bei 130°C/0,01 Torr siedet.

| Mikroanalyse | | |
|---|---|---|
| | berechnet | gefunden |
| % C | 75.21 | 74.14 |
| % H | 9.63 | 9.78 |
| % N | 4.62 | 4.43 |

¹H-NMR (CDCl₃):
0,99 ppm, 1.11 ppm und 1,20 ppm (12 H,m): CH₃ 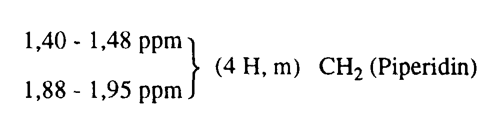
2,51-2,57 ppm, 2,69-2,71 ppm, 2,75-2,79 ppm, 2,87-2,91 ppm (5 H, m): 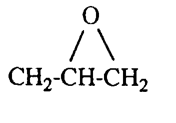 3,63-3,76 ppm (1 H, m): CH (Piperidin)
4,55 ppm (2 H, s): O-CH₂-Aromat 7,25-7,43 ppm (5 H, m): Aromat

### A3) Herstellung von 1-(2,3-Epoxypropyl)-4-dodecyloxy-2,2,6,6-tetramethylpiperidin

### A3a) Herstellung von 4-Dodecyloxy-2,2,6,6-tetramethylpiperidin

In einem 2,5 l Sulfierkolben mit Glasrührer, Thermometer, Tropfrichter und Kühler werden 201 g (1,28 Mol) 4-Hydroxy-2,2,6,6-tetramethylpiperidin, 21,7 g (64 mmol) Tetrabutylammoniumhydrogensulfat, 1,3 l Toluol und 256 g Natriumhydroxid (gelöst in 256 g Wasser) vorgelegt.
Man erwärmt die Mischung auf 65°C und tropft innerhalb 1,5 Stunden 350 g (1,4 Mol) 1-Bromdodecan dazu. Dann lässt man während 15 Stunden unter Rückfluss rühren. Nach dem Abkühlen auf Raumtemperatur giesst man die Mischung auf Eis und wäscht die organische Phase mit Wasser. Nach dem Trocknen über Natriumsulfat wird das Lösungsmittel am Rotavap abgetrennt.
Den Rückstand destilliert man bei 8.10⁻³ Torr über eine Vigreuxkolonne. Man erhält 150 g (36 %) einer klaren Flüssigkeit mit Siedepunkt 124-126°C.

| Mikroanalyse | | |
|---|---|---|
| | berechnet | gefunden |
| % C | 77.46 | 77.51 |
| % H | 13.31 | 13.43 |
| % N | 4.31 | 3.89 |

¹H-NMR (CDCl₃):
0,7 ppm (1 H,s): NH
0,850,94 ppm (3 H, t): CH₃ (Dodecylether)
1,14-1,19 ppm (12 H, s): CH₃ (Piperidin)
1,19-1,28 ppm (10 H, m): (CH₂)₁₀ (Dodecylether)
1,53-1,58 ppm und 1,93-1,99 ppm (4 H, m): CH₂ (Piperidin)
3,44-3,49 ppm (2 H, t): O-CH₂ (Dodecylether)
3,61-3,70 ppm (1 H, m): CH (Piperidin)

### A3b) 1-(2,3-Epoxypropyl)-4-dodecyloxy-2,2,6,6-tetramethylpiperidin

In einem 1,5 l Sulfierkolben, ausgerüstet mit Kühler, Glasrührer, Thermometer, Tropfrichter und Stickstoffballon werden 132 g (0,41 Mol) der unter A3a) hergestellten Verbindung, 400 ml Epichlorhydrin und 5 g Tetramethylammoniumchlorid vorgelegt und auf Rückfluss erhitzt. Zur gut gerührten Mischung werden dann 17,8 g (0,45 Mol) Natriumhydroxid, gelöst in 17,8 g Wasser, während 30 Minuten zugetropft.
Man erhitzt unter Rückfluss während 20 Stunden und kühlt dann auf 30°C ab. Die Mischung wird auf Eiswasser gegossen und zweimal mit Diethylether extrahiert. Die organische Phase wird mit gesättigter Kochsalzlösung gewaschen, über Natriumsulfat getrocknet und eingedampft.
Der Rückstand wird über eine Kieselgelsäule (Hexan/Essigester = 4:1) gereinigt. Ausbeute 119 g (76 %).

| Mikroanalyse | | |
|---|---|---|
| | berechnet | gefunden |
| % C | 75.53 | 75.71 |
| % H | 12.41 | 12.70 |
| % N | 3.67 | 3.54 |

¹H-NMR (CDCl₃):
0,86-0.90 (3 H,t):
1,01, 1,11, 1,20 ppm (12 H, d, s): CH₃ (Piperidin)
1,22-1,38 ppm (20 H, m): 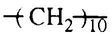 (Dodecylether)
1,51-1,58 und 1,82-1,89 ppm (4 H, m): CH₂ (Piperidin)
2,50-2,58 ppm (2 H, m): CH₂ (Epoxidring)
2,70-2,79 ppm (2 H, m): CH₂ (Epoxid)
2,88-2,90 ppm (1 H, m): CH (Epoxidring)
3,42-3,46 ppm (2 H, t): -O-CH₂(Dodecylether)

### B) Herstellung der Polyether

### B1) Poly [1-(2,3-Epoxypropoxy)-4-benzyloxy-2,2,6,6-tetramethylpiperidin]

In einer Glasampulle mit Magnetrührer werden 15 g (49,4 mmol) des unter A2) hergestellten Epoxids, 221 mg (1,98 mmol) Kalium-tert.-butylat und 221 mg (0,84 mmol) 18-Crown-6 vorgelegt. Unter Argon lässt man bei 150°C 17 Stunden lang polymerisieren. Der gebildete Festkörper wird in THF aufgelöst und in Methanol gefällt. Der Rückstand wird erneut in THF gelöst und in Methanol gefällt. Dann wird der Rückstand am Hochvakuum getrocknet.
Man erhält 6,9 g (46 %) farblosen Feststoff.

| Mikroanalyse | | |
|---|---|---|
| | berechnet | gefunden |
| % C | 75.21 | 74.94 |
| % H | 9.63 | 9.64 |
| % N | 4.62 | 4.48 |

¹H-NMR (CDCl₃):
0,99-1,18 ppm (12 H, m): CH₃ (Piperidin)
1,40-1,43 ppm und 1,86-1,89 ppm (4 H, m): CH₂ (Piperidin)
2,59 ppm (2 H, s): N-CH₂-
3,43 und 3,61 ppm (4 H, m): CH (Piperidin) und 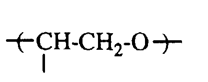 4,52 ppm (2 H, s): O-CH₂-Aromat
7,25-7,47 ppm (5 H, m): Aromat 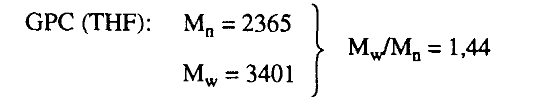 TGA (20°C/Min, N₂): 5 % Gewichtsverlust bei 340°C

### B2) Poly[1-(2,3-Epoxypropyl)-4-dodecyloxy-2,2,6,6-tetramethylpiperidin]

In einer 20 ml Ampulle werden 15 g (39,6 mmol) des unter A3) hergestellten Epoxids, 177 mg (1,58 mmol) Kalium-tert.-butylat und 177 mg (0,67 mmol) 18-Crown-6 vorgelegt. Unter Argon lässt man bei 150°C während 15 Stunden lang polymerisieren. Der Festkörper wird in THF aufgenommen und in Acetonitril gefällt. Nach erneutem Lösen in THF und Ausfällen in Acetonitril erhält man nach dem Trocknen am Hochvakuum 8,7 g (58 %) eines gelblichen Feststoffes.

| Mikroanalyse | | |
|---|---|---|
| | berechnet | gefunden |
| % C | 75.53 | 75.24 |
| % H | 12.41 | 12.46 |
| % N | 3.67 | 3.51 |

¹H-NMR (CDCl₃): Keine Signale von Epoxidprotonen sichtbar 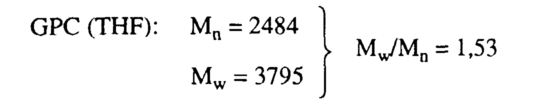 TGA (20°C/Min, N₂): 5 % Gewichtsverlust bei 330°C

### B3) Poly[1-(2,3-Epoxypropyl)-4-octyloxy-2,2,6,6-tetramethylpiperidin]

In einem 100 ml Rundkolben mit Magnetrührer werden unter Argon 60 g (184 mmol) des unter A1) hergestellten Epoxids, 826 mg (7,4 mmol) Kalium-tert.-butylat und 826 mg 18-Crown-6 vorgelegt. Unter Argon lässt man bei 150°C während 15 Stunden lang polymerisieren.
Der erkaltete Festkörper wird in Diethylether gelöst, mit Aktivkohle behandelt, filtriert und in der zehnfachen Menge Acetonitril gefällt. Nach erneutem Lösen in Diethylether, Entfärben und Ausfällen in Acetonitril erhält man 38 g (63 %) Produkt als hochviskoses Öl.

| Mikroanalyse | | |
|---|---|---|
| | berechnet | gefunden |
| % C | 73.79 | 73.57 |
| % H | 12.08 | 12.11 |
| % N | 4.30 | 4.23 |

- GPC (THF):: Mₙ = 2400
M_{w} = 3500
TGA (20°C/Min, N₂): 5 % Masseverlust bei 320°C

### B4) Copolymer aus 1,2,2,6,6-Pentamethyl-4-(2,3-epoxypropoxy)piperidin und 1-(2,3-Epoxypropyl)-4-benzyloxy-2,2,6,6-tetramethylpiperidin

### B4a) Herstellung von 1,2,2,6,6-Pentamethyl-4-(2,3-epoxypropoxy)piperidin

In einem 2,5 1 Sulfierkolben mit mechanischem Rührer, Kühler und 500 ml Tropfrichter werden unter Argonatmosphäre 300 g (7,5 Mol) Natriumhydroxyd in 300 g Wasser gelöst. Dazu gibt man 750 ml Toluol, 48,4 g (0,15 Mol) Tetrabutylammoniumbromid und 257 g (1,5 Mol) 4-Hydroxy-1,2,2,6,6-pentamethylpiperidin.
Bei 60°C werden 347 g Epichlorhydrin (3,75 Mol) in 1,5 Stunden zugetropft, anschließend wird bei gleicher Temperatur für weitere 4 Std. gerührt.
Die Reaktionslösung wird auf 3 l Eiswasser gegossen, die organische Phase abgetrennt, mit Natriumsulfat getrocknet und eingedampft.
Bei 0,05 Torr wird über eine Vigreuxkolonne destilliert und die Fraktion mit Siedepunkt 71-72°C gesammelt.
Ausbeute: 205 g (60 %) GC: >99 %

| Mikroanalyse | | |
|---|---|---|
| | berechnet | gefunden |
| % C | 68.68 | 68.64 |
| % H | 11.07 | 11.21 |
| % N | 6.16 | 6.32 |
| % Cl | 0.0 | 0.0 |

¹H-NMR (CDCl₃):
1,02 und 1,16 ppm (12 H,s): CH₃-Gruppen des Piperidinrings
1,32-1,4 ppm und 1,83-1,91 ppm (4 H, m): -CH₂-Gruppen des Piperidinrings
2,23 ppm (3 H, s): N-CH₃
2,60-2,62 ppm und 2,78-2,82 ppm (2 H, m): CH₂-Gruppe des Epoxidrings
3,42-3,47 ppm und 3,71-3,76 ppm (2 H, m): O-CH₂-Gruppe
3,57-3,67 ppm (1 H, m): CH-O des Piperidinrings

### B4b) Herstellung des Copolymeren

36,4 g (0,12 Mol) des Produktes aus A2b, 27,3 g (0,12 Mol) des Produktes aus B4a, 538 mg (4,8 mMol) Kalium-tert.butylat und 538 mg 18-Crown-6 werden in einem 100 ml-Rundkolben vorgelegt. Unter Argon wird die Lösung bei 150°C während 22 h polymerisiert. Das Reaktionsprodukt wird in THF gelöst und auf Acetonitril ausgefällt. Diese Umfällung wird wiederholt. Das Polymer wird unter Hochvakuum getrocknet. Man erhält 11,8 g des Copolymeren B4 gemäß Titel.

| Mikroanalyse | | |
|---|---|---|
| | berechnet | gefunden |
| % C | 70.95 | 70.83 |
| % H | 10.58 | 10.57 |
| % N | 5.62 | 5.50 |

¹H-NMR (CDCl₃): N-CH₃ (2,22 ppm) : Aromat(7,26-7,33 ppm) = 2,5: 1
DSC (10°C/Min): T_{G} = 21°C
GPC (THF): Mₙ = 1700; M_{w} = 2800.

### C) Anwendungsbeispiele

### Beispiel C1: Lichtstabilisierung von Polypropylenfasern

Je 2,5 g des erfindungsgemäßen Stabilisators werden zusammen mit 1 g Tris(2,4-di-tert.-butylphenyl)phosphit, 1 g Calcium-Monoethyl-3,5-di-tert butyl-4-hydroxybenzylphosphonat, 1 g Calciumstearat und 2,5 g TiO₂ (Kronos RN 57) in einem Turbomischer mit 1000 g Polypropylenpulver vermischt (Schmelzindex 12 g/10 min, gemessen bei 230°C/2,16 kg).
Die Mischungen werden bei 200-230°C zu Granulat extrudiert; dieses wird anschließend mit Hilfe einer Pilotanlage (Leonard; Sumirago/VA, Italy) unter folgenden Bedingungen zu Fasern verarbeitet:
- Extrudertemperatur:: 200-230°C
- Kopftemperatur:: 255-260°C
- Streckverhältnis:: 1:3,5
- Strecktemperatur:: 100°C
- Fasern:: 10 den

Die so hergestellten Fasern werden vor weißem Hintergrund in einem Weather-O-Meter Typ 65WR (Atlas Corp.) bei einer Schwarztafeltemperatur von 63°C gemäß ASTM D 2565-85 belichtet. Nach unterschiedlichen Belichtungszeiten wird die verbliebene Zugfestigkeit der Proben gemessen. Aus den Meßwerten wird die Belichtungszeit T₅₀ berechnet, nach der die Zugfestigkeit der Proben nur noch halb so groß ist.

Zu Vergleichszwecken werden Fasern ohne erfindungsgemäßen Stablisator unter sonst gleichen Bedingungen hergestellt und getestet. Die Ergebnisse sind in nachfolgender Tabelle C1 zusammengestellt.

**Tab.C1:**

| Belichtungsdauer (T₅₀/h) bis zur Halbierung der Zugfestigkeit | |
|---|---|
| Stabilisator | T₅₀ |
| keiner | 300 h |
| aus Beispiel B1 | 1400 h |
| aus Beispiel B2 | 1310 h |
| aus Beispiel B3 | 1400 h |

Die erfindungsgemäß stabilisierten Fasern weisen einen hervorragenden Festigkeitserhalt auf.

### Beispiel C2: Stabilisierung eines Zweischicht-Lackes

Die Lichtschutzmittel werden in 5-10 g Xylol eingearbeitet und in einem Klarlack folgender Zusammensetzung geprüft:

| | |
|---|---|
| Synthacryl® SC 303¹⁾ | 27,51 |
| Synthacryl® SC 370²⁾ | 23,34 |
| Maprenal® MF 650 ³⁾ | 27,29 |
| Butylacetat/Butanol (37/8) | 4,33 |
| Isobutanol | 4,87 |
| Solvesso® 150⁴⁾ | 2,72 |
| Kristallöl K-30⁵⁾ | 8,74 |
| Verlaufshilfsmittel Baysilon Ma ⁶⁾ | 1,20 |
| | 100,00 g |

| | |
|---|---|
| 1) Acrylatharz, Fa. Hoechst AG; 65 % Lösung in Xylol/Butanol 36:9 | |
| 2) Acrylatharz, Fa. Hoechst AG; 75 % Lösung in Solvesso® 100⁴⁾ | |
| 3) Melaminharz, Fa. Hoechst AG; 55 % Lösung in Isobutanol | |
| 4) Hersteller: Fa. ESSO | |
| 5) Hersteller: Fa. Shell | |
| 6) 1 % in Solvesso® 150; Hersteller: Fa. Bayer AG | |

Diesem Lack wird 1 Gew.-% Stabilisator zugegeben. Einige Proben werden zusätzlich mit 1,5 Gew.-% eines Benztriazol UV-Absorbers (UVA) versetzt. Die angegebenen Mengen beziehen sich jeweils auf den Feststoffgehalt des Lackes. Der Lack wird mit einem 1:1-Gemisch von Butylacetat und Xylol auf Spritzfähigkeit verdünnt und auf ein mit einem Silbermetallic Basislack lackiertes Aluminiumblech gespritzt. Die Proben werden dann 30 Minuten bei 130°C gehärtet. Es resultiert eine Schichtdicke des Klarlackes von 40-45 µm.

Die so bereiteten Proben werden in einem UVCON®-Belichtungsgerät (Atlas Corp.) bewittert bei einem Zyklus von 4 h UV-Bestrahlung bei 60°C und 4 h Kondensation bei 50°C.

Nach jeweils 400 h Bewitterung wird der 20°-Glanz der Proben nach DIN 67530 gemessen, gleichzeitig werden die Proben auf Rißbildung überprüft. Tabelle C2 zeigt die nach 4800 h Bewitterung erhaltenen Daten bezüglich der Rißbildung. Die Mengenangaben beziehen sich auf den Feststoffgehalt des Lackes.

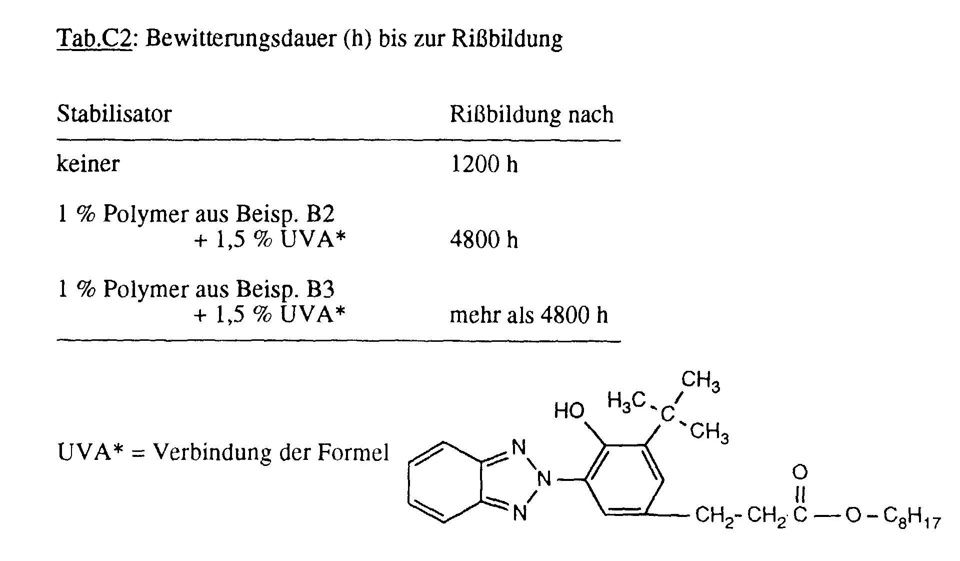

Die Proben mit den erfindungsgemässen Stabilisatoren weisen eine hervorragende Glanzhaltung auf; Risse zeigen sich erst nach sehr langer Bewitterungszeit.

### Beispiel C3: Stabilisierung eines photographischen Materials 0,087 g des Gelbkupplers der Formel

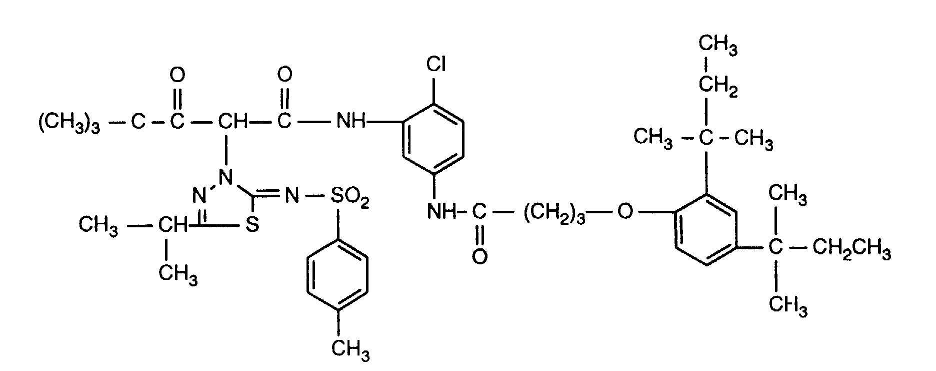

werden in 2,0 ml einer Lösung des erfindungsgemässen Stabilisators in Ethylacetat (2,25 g/100 ml) gelöst. Zu 1,0 ml dieser Lösung gibt man 9,0 ml einer 2,3%-igen wässrigen Gelatinelösung, die auf einem pH-Wert von 6,5 eingestellt ist, und 1,744 g/l des Netzmittels der Formel 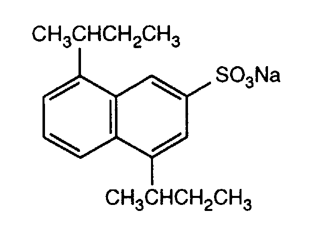 enthält.

Zu 5,0 ml der so erhaltenen Kuppleremulsion gibt man 2 ml einer Silberbromid-Emulsion mit einem Silbergehalt von 6,0 g/l sowie 1,0 ml einer 0,7%-igen wässrigen Lösung des Härters der Formel 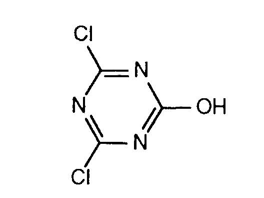 und vergiesst es auf ein 13 x 18 cm Kunststoff-beschichtetes Papier. Nach einer Härtungszeit von 7 Tagen werden die Proben hinter einem Silber-Stufenkeil mit 125 Lux·s belichtet und anschliessend im Ektaprint 2®-Prozess der Firma Kodak verarbeitet.

Die erhaltenen Gelbkeile werden in einem Atlas Weather-Ometer mit einer 2500 W-Xenonlampe hinter einem UV-Filter (Kodak 2C) mit total 60 k Joule/cm² bestrahlt.

Eine Probe ohne Stabilisator läuft als Standard mit.

Der bei der Bestrahlung eingetretene Farbdichteverlust beim Absorptionsmaximum des gelben Farbstoffes wird mit einem Densitometer TR 924A der Fa. Macbeth gemessen.

Der Lichtschutzeffekt ist aus dem Farbdichteverlust ersichtlich. Je kleiner der Dichteverlust, desto höher ist die Lichtschutzwirksamkeit.

Die erfindungsgemässen Stabilisatoren zeigen eine gute Lichtschutzwirkung.

## Patentansprüche

1. Polyether enthaltend 1-100 Mol-% wiederkehrende Einheiten der Formel I 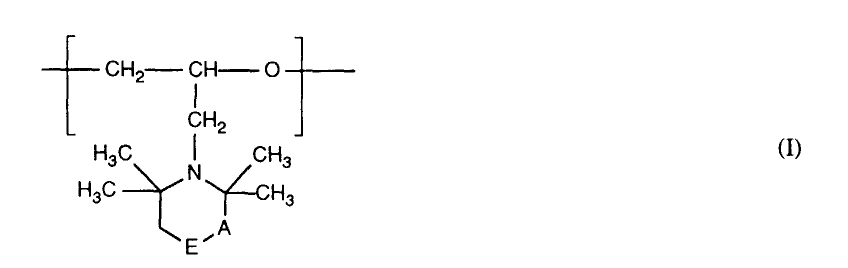 und 0-99 Mol-% strukturelle Einheiten der Formel II 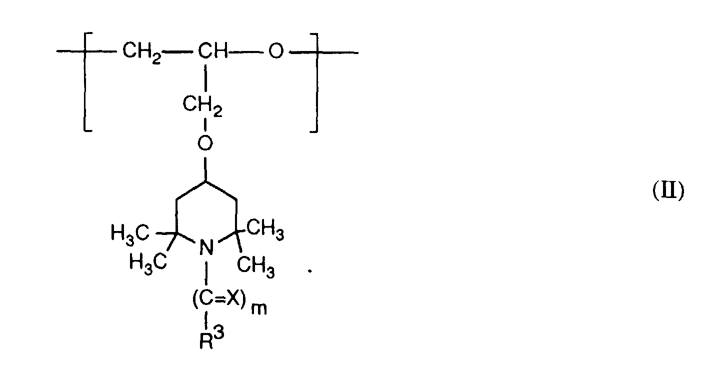 und/oder der Formel III 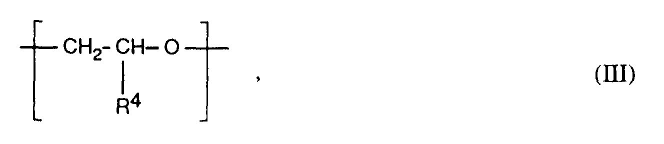 wobei die mittels Gelpermeationschromatographie gemessene Molmasse Mₙ des Homo- oder Copolymers zwischen 600 und 600 000 g/Mol beträgt und
worin m 0 oder 1 darstellt;
A -CH₂- oder -CO- bedeutet;
wenn A Methylen ist, E die Bedeutung 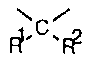 hat, und
wenn A Carbonyl ist, E die Bedeutung 〉N - R¹⁷ hat;
R¹ Wasserstoff;
R² Wasserstoff; -O-R⁵; -S-R⁵; oder -N(R¹³)R¹⁴; oder
R¹ und R² gemeinsam einen Substituenten =O bedeuten oder zusammen mit dem Kohlenstoffatom, an das sie gebunden sind, einen Fünf- oder Sechsring einer der Formeln 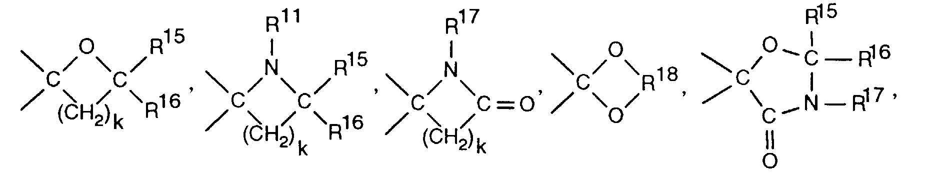 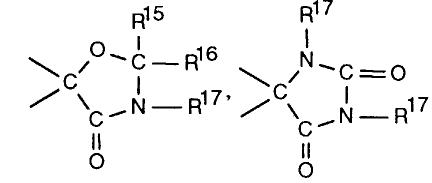 darstellen, wobei k 2 oder 3 ist;
R³ im Fall, daß m 0 oder 1 ist, C₁-C₃₆-Alkyl oder C₇-C₃₆-Aralkyl, die jeweils unsubstituiert oder durch C₅-C₈-Cycloalkyl substituiert und/oder im aliphatischen Teil durch C₅-C₈-Cycloalkylen und/oder im aliphatischen Teil durch Sauerstoff oder Schwefel oder -NR¹¹- unterbrochen und/oder im aromatischen Teil durch 1 bis 3 C₁-C₄-Alkyl- oder C₁-C₄-Alkoxyreste substituiert sind; C₅-C₁₂-Cycloalkyl, welches unsubstituiert oder durch 1 bis 4 C₁-C₄-Alkyl- und/oder C₁-C₄-Alkoxyreste substituiert ist; C₆-C₁₀-Aryl, welches unsubstituiert oder durch 1 bis 4 C₁-C₄-Alkyl- und/oder C₁-C₄-Alkoxyreste substituiert ist, bedeutet; und
R³ im Fall, daß m 0 ist, zusätzlich Wasserstoff; C₁-C₃₆-Alkoxy oder C₇-C₃₆-Aralkoxy, die jeweils unsubstituiert oder durch C₅-C₈-Cycloalkyl substituiert und/oder im aliphatischen Teil durch C₅-C₈-Cycloalkylen und/oder im aliphatischen Teil durch Sauerstoff oder Schwefel oder -NR¹¹-unterbrochen und/oder im aromatischen Teil durch 1 bis 3 C₁-C₄-Alkyl- oder C₁-C₄-Alkoxyreste substituiert sind; C₅-C₁₂-Cycloalkoxy, welches unsubstituiert oder durch 1 bis 4 C₁-C₄-Alkyl- und/oder C₁-C₄-Alkoxyreste substituiert ist; sowie C₆-C₁₀-Aryloxy, welches unsubstituiert oder durch 1 bis 4 C₁-C₄-Alkyl- und/oder C₁-C₄-Alkoxyreste substituiert ist, umfaßt;
R⁴ eine der nachstehend für R⁵ angegebenen Bedeutungen hat oder -O-R⁵, -CH₂-O-R⁵ oder Wasserstoff darstellt;
R⁵ C₁-C₅₀-Alkyl bedeutet; oder C₂-C₅₀-Alkyl bedeutet, welches durch -O-, -S- und/oder C₅-C₈-Cycloalkylen unterbrochen ist; oder R⁵ C₅-C₁₂-Cycloalkyl, welches unsubstituiert oder durch 1 bis 4 -R¹² substituiert ist; C₆-C₁₀-Aryl, welches unsubstituiert oder durch 1 bis 4 -R¹² oder -OR¹² substituiert ist; oder C₇-C₅₀-Aralkyl, welches unsubstituiert oder durch C₅-C₈-Cycloalkyl substituiert und/oder im aliphatischen Teil durch C₅-C₈-Cycloalkylen unterbrochen und/oder im aliphatischen Teil durch Sauerstoff oder Schwefel unterbrochen und/oder im aromatischen Teil durch 1 bis 4 -R¹² oder -OR¹² substituiert ist, bedeutet;
R¹¹ C₁-C₁₈-Alkyl; C₅-C₈-Cycloalkyl; Phenyl; Naphthyl; C₇-C₉-Phenylalkyl; oder
C₁₁-C₁₄-Naphthylalkyl bedeutet;
R¹² C₁-C₁₈-Alkyl; C₅-C₇-Cycloalkyl; Phenyl oder Benzyl ist;
R¹³ und R¹⁴, unabhängig voneinander, jeweils eine der für R⁵ angegebenen Bedeutungen haben; oder
R¹³ und R¹⁴ zusammen mit dem Stickstoffatom, an das sie gebunden sind, zyklisches Imid der Formel 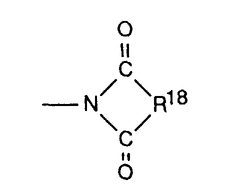 darstellen, dessen Ringstruktur 4 bis 6 Kohlenstoffatome enthält;
R¹⁵ und R¹⁶, unabhängig voneinander, H; oder C₁-C₁₂-Alkyl; oder gemeinsam geradkettiges, α,ω-verknüpftes C₄-C₁₃-Alkylen bedeuten;
R¹⁷ eine der Bedeutungen von R¹¹ hat;
R¹⁸ C₂-C₁₈-Alkylen darstellt;
und
X ein Sauerstoff- oder Schwefelatom darstellt.

2. Polyether gemäß Anspruch 1 enthaltend 20 bis 100 Mol-% wiederkehrende Einheiten der Formel I.

3. Polyether gemäß Anspruch 1, worin
R³ im Fall, daß m 0 ist, zusätzlich C₁-C₃₆-Alkoxy; durch -O- unterbrochenes C₂-C₃₆-Alkoxy; C₇-C₃₆-Aralkoxy; im aliphatischen Teil durch -O- unterbrochenes und/oder im aromatischen Teil durch 1 bis 3 C₁-C₄-Alkyl- oder C₁-C₄-Alkoxyreste substituieres C₇-C₃₆-Aralkoxy; C₅-C₉-Cycloalkoxy, welches unsubstituiert oder durch 1 bis 3 C₁-C₄-Alkyl- und/oder C₁-C₄-Alkoxyreste substituiert ist; sowie Phenyloxy, welches unsubstituiert oder durch 1 bis 4 C₁-C₄-Alkyl- und/oder C₁-C₄-Alkoxyreste substituiert ist, umfaßt;
R⁵ C₁-C₅₀-Alkyl; C₂-C₅₀-Alkyl, welches durch -O- unterbrochen ist; C₅-C₉-Cycloalkyl, welches unsubstituiert oder durch -R¹² substituiert ist; Phenyl, welches unsubstituiert oder durch 1 bis 3 -R¹² oder -OR¹² substituiert ist; oder C₇-C₅₀-Phenylalkyl, welches unsubstituiert oder im aromatischen Teil durch 1 bis 3 -R¹² oder -OR¹² substituiert und/oder im aliphatischen Teil durch -O- unterbrochen ist, bedeutet;
R¹¹ C₁-C₁₈-Alkyl;C₅-C₈-Cycloalkyl; Phenyl oder C₇-C₉-Phenylalkyl bedeutet; und X ein Sauerstoffatom darstellt.

4. Polyether gemäß Anspruch 3, worin
A Methylen und E 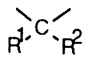 ist;
R¹ Wasserstoff ist;
R²-O-R⁵ bedeutet;
R³ im Fall, daß m 0 oder 1 ist, C₁-C₁₈-Alkyl; oder C₇-C₁₈-Phenylalkyl, die jeweils unsubstituiert oder am Phenylring durch 1 bis 3 C₁-C₄-Alkylreste substituiert sind;
C₅-C₉-Cycloalkyl; Phenyl, welches unsubstituiert oder durch 1 bis 3 Reste C₁-C₄-Alkyl substituiert ist, bedeutet; und
R³ im Fall, daß m 0 ist, zusätzlich C₄-C₃₆-Alkoxy oder C₇-C₁₈-Phenylalkoxy, die jeweils unsubstituiert oder am Phenylring durch 1 bis 3 C₁-C₄-Alkylreste substituiert sind;
C₅-C₉-Cycloalkoxy; Phenyloxy, welches unsubstituiert oder durch 1 bis 3 Reste C₁-C₄-Alkyl substituiert ist, umfaßt; und
R⁵ C₆-C₃₆-Alkyl; durch -O- unterbrochenes C₆-C₃₆-Alkyl; C₅-C₉-Cycloalkyl; Phenyl;
C₇-C₃₆-Phenylalkyl; oder C₇-C₃₆-Phenylalkyl, welches im aliphatischen Teil durch -O- unterbrochen ist, bedeutet.

5. Polyether gemäß Anspruch 4, worin m 0 ist; und
R⁵ C₆-C₁₈-Alkyl; C₅-C₉-Cycloalkyl; Phenyl; oder C₇-C₉-Phenylalkyl bedeutet.

6. Polyether gemäß Anspruch 5 bestehend aus wiederkehrenden Einheiten der Formel I.

7. Zusammensetzung enthaltend (a) ein gegen Schädigung durch Licht, Sauerstoff und/oder Wärme empfindliches organisches Material und (b) als Stabilisator einen Polyether enthaltend wiederkehrende Einheiten der Formel I gemäß Anspruch 1.

8. Zusammensetzung gemäß Anspruch 7, worin Komponente (a) ein organisches Polymer ist.

9. Zusammensetzung gemäß Anspruch 7, worin Komponente (a) ein Polyolefin, ein photographisches Material oder ein Lackbindemittel auf der Basis von Acryl-, Alkyd-, Polyurethan-, Polyester- oder Polyamidharz oder entsprechender modifizierter Harze ist.

10. Zusammensetzung gemäß Anspruch 7, enthaltend zusätzlich zu den Komponenten (a) und (b) ein konventionelles Additiv.

11. Zusammensetzung gemäß Anspruch 7 enthaltend 0,01 bis 10 Gew.-% der Komponente (b), bezogen auf das Gewicht der Zusammensetzung.

12. Verfahren zum Stabilisieren organischer Polymere gegen Schädigung durch Licht, Sauerstoff und/oder Wärme, dadurch gekennzeichnet, daß man den Polymeren als Stabilisator einen Polyether enthaltend wiederkehrende Einheiten der Formel I gemäß Anspruch 1 beimischt.

13. Verwendung von Polyethern enthaltend wiederkehrende Einheiten der Formel I gemäß Anspruch 1 zum Stabilisieren von organischem Material gegen Schädigung durch Licht, Sauerstoff und/oder Wärme.

## Claims

1. A polyether comprising 1-100 mol % of recurring units of the formula I 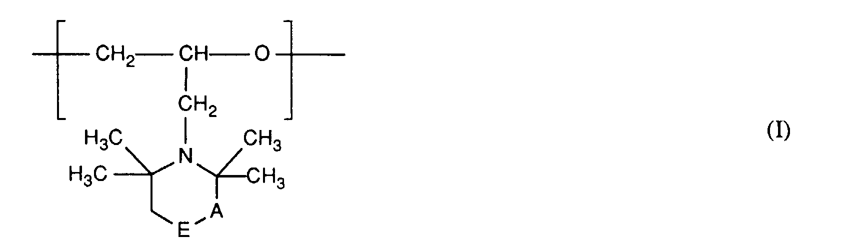 and 0-99 mol % of structural units of the formula II 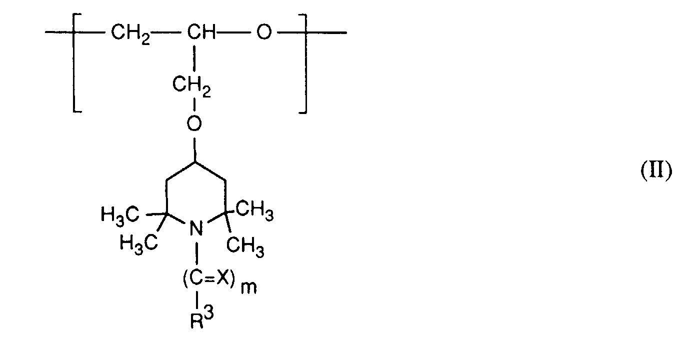 and/or of the formula III 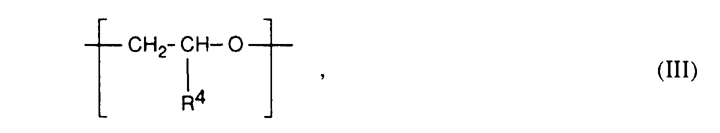 where the molecular weight Mₙ of the homopolymer or copolymer, measured by gel permeation chromatography, is from 600 to 600,000 g/mol, and in which m is 0 or 1; A is -CH₂- or -CO-; when A is methylene, E is 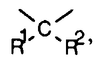 and when A is carbonyl, E is 〈N-R¹⁷;
R¹ is hydrogen;
R² is hydrogen; -O-R⁵; -S-R⁵; or -N(R¹³)R¹⁴; or
R¹ and R² together are a =O substituent or together with the carbon atom to which they are bonded are a five- or six-membered ring of the formulae 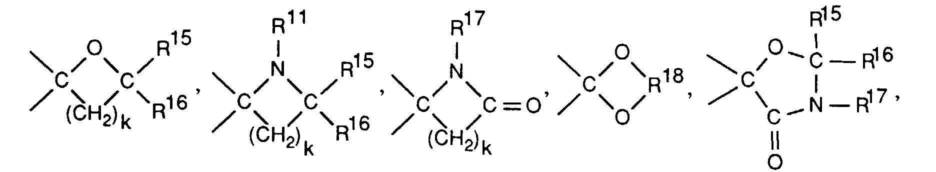 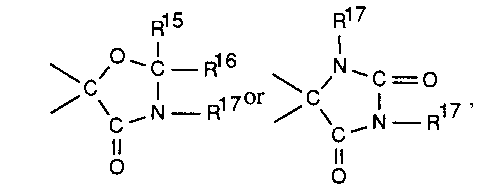 where k is 2 or 3;
R³, in the case where m is 0 or 1, is C₁-C₃₆alkyl or C₇-C₃₆aralkyl, each of which is unsubstituted or substituted by C₅-C₈cycloalkyl and/or is interrupted in the aliphatic part by C₅-C₈cycloalkylene and/or in the aliphatic part by oxygen or sulfur or -NR¹¹- and/or is substituted in the aromatic part by 1 to 3 C₁-C₄alkyl or C₁-C₄alkoxy radicals; C₅-C₁₂cycloalkyl which is unsubstituted or substituted by 1 to 4 C₁-C₄alkyl and/or C₁-C₄alkoxy radicals; C₆-C₁₀aryl which is unsubstituted or substituted by 1 to 4 C₁-C₄alkyl and/or C₁-C₄alkoxy radicals; and
R³, in the case where m is 0, can alternatively be hydrogen; C₁-C₃₆alkoxy or C₇-C₃₆aralkoxy, each of which is unsubstituted or substituted by C₅-C₈cycloalkyl and/or is interrupted in the aliphatic part by C₅-C₈cycloalkylene and/or in the aliphatic part by oxygen or sulfur or -NR¹¹- and/or is substituted in the aromatic part by 1 to 3 C₁-C₄alkyl or C₁-C₄alkoxy radicals; C₅-C₁₂cycloalkoxy which is unsubstituted or substituted by 1 to 4 C₁-C₄alkyl and/or C₁-C₄alkoxy radicals; or C₆-C₁₀aryloxy which is unsubstituted or substituted by 1 to 4 C₁-C₄alkyl and/or C₁-C₄alkoxy radicals;
R⁴ is as defined below for R⁵ or is -O-R⁵, -CH₂-O-R⁵ or hydrogen;
R⁵ is C₁-C₅₀alkyl; or C₂-C₅₀alkyl which is interrupted by -O-, -S- and/or
C₅-C₈cycloallcylene; or R⁵ is C₅-C₁₂cycloalkyl which is unsubstituted or substituted by 1 to 4 -R¹²; C₆-C₁₀aryl which is unsubstituted or substituted by 1 to 4 -R¹² or -OR¹²; or C₇-C₅₀aralkyl which is unsubstituted or substituted by C₅-C₈cycloalkyl and/or is interrupted in the aliphatic part by C₅-C₈cycloalkylene and/or is interrupted in the aliphatic part by oxygen or sulfur and/or is substituted in the aromatic part by 1 to 4 -R¹² or -OR¹²·
R¹¹ is C₁-C₁₈alkyl; C₅-C₈cycloalkyl; phenyl; naphthyl; C₇-C₉phenylalkyl; or C₁₁-C₁₄naphthylalkyl;
R¹² is C₁-C₁₈alkyl; C₅-C₇cycloalkyl; phenyl or benzyl;
R¹³ and R¹⁴, independently of one another, each have one of the meanings given for R⁵; or
R¹³ and R¹⁴, together with the nitrogen atom to which they are bonded, are cyclic imide of the formula 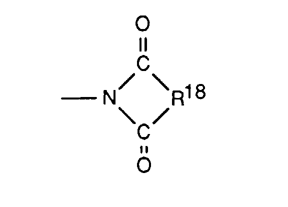 whose ring structure contains 4 to 6 carbon atoms;
R¹⁵ and R¹⁶, independently of one another, are H; or C₁-C₁₂alkyl; or together are straight-chain, α,ω-linked C₄-C₁₃alkylene;
R¹⁷ has one of the meanings for R¹¹;
R¹⁸ is C₂-C₁₈alkylene;
and
X is an oxygen or sulfur atom.

2. A polyether according to claim 1, comprising from 20 to 100 mol % of recurring units of the formula I.

3. A polyether according to claim 1, in which
R³, in the case where m is 0, can alternatively be C₁-C₃₆alkoxy; C₂-C₃₆alkoxy which is interrupted by -O-; C₇-C₃₆aralkoxy; C₇-C₃₆aralkoxy which is interrupted in the aliphatic part by -O- and/or is substituted in the aromatic part by 1 to 3 C₁-C₄alkyl or C₁-C₄alkoxy radicals; C₅-C₉cycloalkoxy which is unsubstituted or substituted by 1 to 3 C₁-C₄alkyl and/or C₁-C₄alkoxy radicals; or phenoxy which is unsubstituted or substituted by 1 to 4 C₁-C₄alkyl and/or C₁-C₄alkoxy radicals;
R⁵ is C₁-C₅₀alkyl; C₂-C₅₀alkyl which is interrupted by -O-; C₅-C₉cycloalkyl which is unsubstituted or substituted by -R¹²; phenyl which is unsubstituted or substituted by 1 to 3 -R¹² or -OR¹²; or C₇-C₅₀phenylalkyl which is unsubstituted or substituted in the aromatic part by 1 to 3 -R¹² or -OR¹² and/or is interrupted in the aliphatic part by -O-; R¹¹ is C₁-C₁₈alkyl; C₅-C₈cycloalkyl; phenyl or C₇-C₉phenylalkyl; and
X is an oxygen atom.

4. A polyether according to claim 3, in which
A is methylene and E is 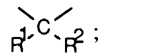
R¹ is hydrogen;
R² is -O-R⁵;
R³, in the case where m is 0 or 1, is C₁-C₁₈alkyl; or C₇-C₁₈phenylalkyl, each of which is unsubstituted or substituted on the phenyl ring by 1 to 3 C₁-C₄alkyl radicals; C₅-C₉cycloalkyl; or phenyl which is unsubstituted or substituted by 1 to 3 C₁-C₄alkyl radicals; and
R³, in the case where m is 0, can alternatively be C₄-C₃₆alkoxy or C₇-C₁₈phenylalkoxy, each of which is unsubstituted or substituted on the phenyl ring by 1 to 3 C₁-C₄alkyl radicals; C₅-C₉cycloalkoxy; or phenoxy which is unsubstituted or substituted by 1 to 3 C₁-C₄alkyl radicals; and
R⁵ is C₆-C₃₆alkyl; C₆-C₃₆alkyl which is interrupted by -O-; C₅-C₉cycloalkyl; phenyl; C₇-C₃₆phenylalkyl; or C₇-C₃₆phenylalkyl which is interrupted in the aliphatic part by -O-.

5. A polyether according to claim 4, in which m is 0; and
R⁵ is C₆-C₁₈alkyl; C₅-C₉cycloalkyl; phenyl; or C₇-C₉phenylalkyl.

6. A polyether according to claim 5, consisting of recurring units of the formula I.

7. A composition comprising (a) an organic material which is sensitive to damage by light, oxygen and/or heat, and (b), as stabilizer, a polyether containing recurring units of the formula I according to claim 1.

8. A composition according to claim 7, in which component (a) is an organic polymer.

9. A composition according to claim 7, in which component (a) is a polyolefin, a photographic material or a paint binder based on acrylic, alkyd, polyurethane, polyester or polyamide resin or corresponding modified resins.

10. A composition according to claim 7, in which a conventional additive is present in addition to components (a) and (b).

11. A composition according to claim 7, containing from 0.01 to 10 % by weight of component (b), based on the weight of the composition.

12. A process for the stabilization of organic polymers against damage by light, oxygen and/or heat, which comprises admixing, as stabilizer, a polyether comprising recurring units of the formula I according to claim 1 with the polymers.

13. The use of a polyether comprising recurring units of the formula I according to claim 1 for the stabilization of organic material against damage by light, oxygen and/or heat.

## Revendications

1. Polyéther contenant 1 - 100% en mole de motif récurrents de formule I 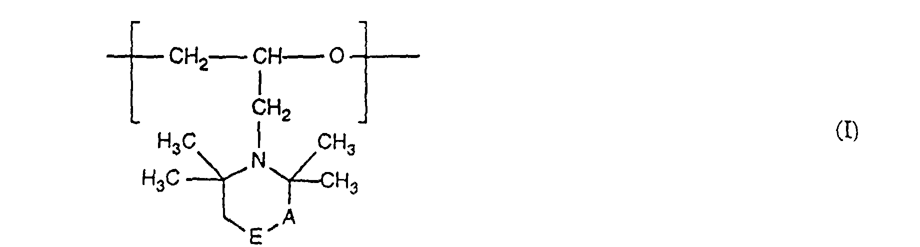 et 0 - 99% en mole de motifs de structure de formule II 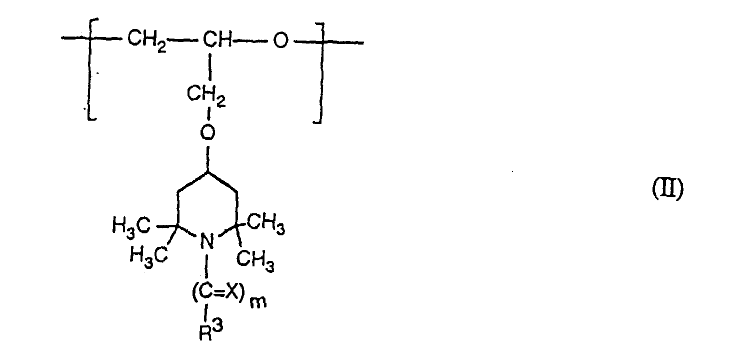 et/ou de formule III 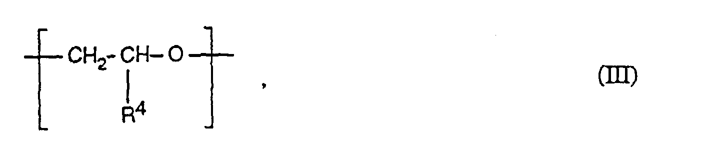 dans lequel la masse molaire Mₙ de l'homo- ou du copolymére mesurée par chromatographie par perméation de gel est entre 600 et 600 000g/mol et formules dans lesquelles m représente 0 ou 1;
A représente -CH₂- ou -CO-; lorsque A est un groupe méthylène, E a la signification 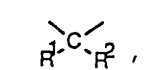 et lorsque A est un groupe carbonyle, E a la signification 〈N-R¹⁷;
R¹ représente un atome d'hydrogène;
R² représente un atome d'hydrogène; -O-R⁵; -S-R⁵; ou -N(R¹³)R¹⁴; ou
R¹ et R² représentent ensemble un substituant =O ou, ensemble avec l'atome de carbone, auquel ils sont liés, un cycle à cinq ou six chaînons d'une des formules 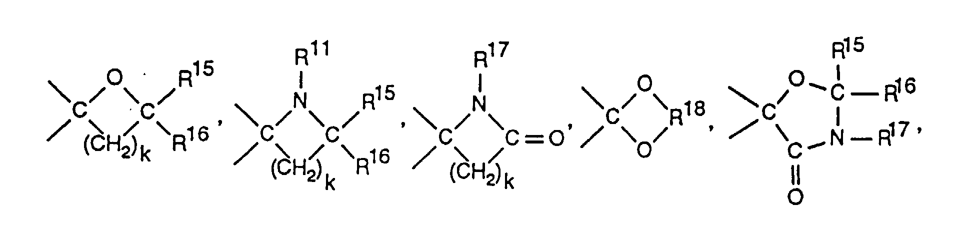 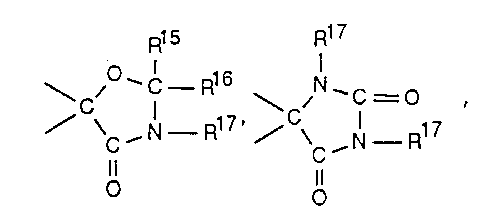 dans lesquelles k est 2 ou 3;
R³ dans le cas, où m est 0 ou 1 représente un groupe alkyle en C₁-C₃₆ ou aralkyle en C₇-C₃₆, qui est respectivement non substitué ou substitué par un groupe cycloalkyle en C₅-C₈ et/ou est interrompu dans la partie aliphatique par un groupe cycloalkylène en C₅-C₈ et/cu dans la partie aliphatique par un atome d'oxygène ou de soufre ou -NR¹¹- et/ou est substitué dans la partie aromatique par 1 à 3 groupes alkyle en C₁-C₄ et/ou alcoxy en C₁-C₄; cycloalkyle en C₅-C₁₂, qui est non substitué ou substitué par 1 à 4 groupes alkyle en C₁-C₄ et/ou alcoxy en C₁-C₄; aryle en C₆-C₁₀, qui est non substitué ou substitué par 1 à 4 groupes alkyle en C₁-C₄ et/ou alcoxy en C₁-C₄; et
R³, dans le cas où m est 0, comprend de plus un atome d'hydrogène; un groupe alcoxy en C₁-C₃₆ ou aralcoxy en C₇-C₃₆, qui est respectivement non substitué ou substitué par un groupe cycloalkyle en C₅-C₈ et/ou est interrompu dans la partie aliphatique par un groupe cycloalkylène en C₅-C₈ et/ou dans la partie aliphatique par un atome d'oxygène ou de soufre ou -NR¹¹- et/ou est substitué dans la partie aromatique par 1 à 3 groupes alkyle en C₁-C₄ ou alcoxy en C₁-C₄; cycloalcoxy en C₅-C₁₂, qui est non substitué ou substitué par 1 à 4 groupes alkyle en C₁-C₄ et/ou alcoxy en C₁-C₄; et aryloxy en C₆-C₁₀, qui est non substitué ou substitué par 1 à 4 groupes alkyle en C₁-C₄ et/ou alcoxy en C₁-C₄;
R⁴ a une des significations suivantes indiquées pour R⁵ ou représente -O-R⁵, -CH₂-O-R⁵ ou un atome d'hydrogène;
R⁵ représente un groupe alkyle en C₁-C₅₀; ou représente un groupe alkyle en C₂-C₅₀ qui est interrompu par -O-, -S-et/ou un groupe cycloalkylène en C₅-C₈; ou R⁵ représente un groupe cycloalkyle en C₅-C₁₂, qui est non substitué ou substitué par 1 à 4 -R¹²; aryle en C₆-C₁₀, qui est non substitué ou substitué par 1 à 4 -R¹² ou -OR¹²; ou aralkyle en C₁₇-C₅₀, qui est non substitué ou substitué par un groupe cycloalkyle en C₅-C₈ et/ou est interrompu dans la partie aliphatique par un groupe cycloalkylène en C₅-C₈ et/ou est interrompu dans la partie aliphatique par un atome d'oxygène ou de soufre et/ou est substitué dans la partie aromatique par 1 à 4 -R¹² ou -OR¹²;
R¹¹ représente un groupe alkyle en C₁-C₁₈; cycloalkyle en C₅-C₈; phényle; naphtyle; phénylalkyle en C₇-C₉ ou naphtylalkyle en C₁₁-C₁₄;
R¹² représente un groupe alkyle en C₁-C₁₈; cycloalkyle en C₅-C₇; phényle ou benzyle;
R¹³ et R¹⁴ ont respectivement, indépendamment l'un de l'autre, une des significations indiquées pour R⁵; ou
R¹³ et R¹⁴ représentent ensemble avec l'atome d'azote, auquel ils sont liés, un imide cyclique de formule 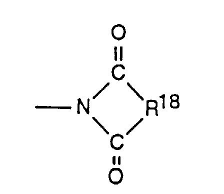 dont la structure de cycle contient 4 à 6 atomes de carbone,
R¹⁵ et R¹⁶ représentent, indépendamment l'un de l'autre, un atome d'hydrogène; ou un groupe alkyle en C₁-C₁₂; ou représentent ensemble un groupe alkylène en C₄-C₁₃ à chaîne linéaire, couplé en α,ω;
R¹⁷ a une des significations de R¹¹;
R¹⁸ représente un groupe alkylène en C₂-C₁₈;
et
X représente un atome d'oxygène ou de soufre.

2. Polyéther selon la revendication 1 contenant 20 à 100% en mole de motifs récurrents de formule I.

3. Polyéther selon la revendication 1, dans lequel
R³, dans le cas où m est 0, comprend de plus un groupe alcoxy en C₁-C₃₆; alcoxy en C₁-C₃₆ interrompu par -O-; aralcoxy en C₇-C₃₆; aralcoxy en C₇-C₃₆, interrompu dans la partie aliphatique par -O- et/ou substitué dans la partie aromatique par 1 à 3 groupes alkyle en C₁-C₄ ou alcoxy en C₁-C₄; cycloalcoxy en C₅-C₉, qui est non substitué ou substitué par 1 à 3 groupes alkyle en C₁-C₄ et/ou alcoxy en C₁-C₄; et phényloxy, qui est non substitué ou substitué par 1 à 4 groupes alkyle en C₁-C₄ et/ou alcoxy en C₁-C₄;
R⁵ représente un groupe alkyle en C₁-C₅₀; alkyle en C₂-C₅₀ qui est interrompu par -O-; cycloalkyle en C₅-C_{9,} qui est non substitué ou substitué par -R¹²; phényle, qui est non substitué ou substitué par 1 à 3 -R¹² ou -OR¹²; ou phénylalkyle en C₇-C₅₀, qui est non substitué ou substitué dans la partie aromatique par 1 à 3 -R¹² ou -OR¹² et/ou est interrompu dans la partie aliphatique par -O-;
R¹¹ représente un groupe alkyle en C₁-C₁₈; cycloalkyle en C₅-C₈; phényle ou phénylalkyle en C₇-C₉; et
X représente un atome d'oxygène.

4. Polyéther selon la revendication 3, dans lequel
A est un groupe méthylène et E est 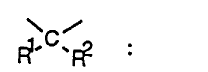
R¹ est un atome d'hydrogène;
R² représente -OR⁵;
R³ dans le cas où m est 0 ou 1, représente un groupe alkyle en C₁-C₁₈; ou phénylalkyle en C₇-C₁₈ qui est respectivement non substitué ou substitué sur le noyau phényle par 1 à 3 groupes alkyle en C₁-C₄; cycloalkyle en C₅-C₉; phényle, qui est non substitué ou substitué par 1 à 3 groupes alkyle en C₁-C₄; et
R³ dans le cas où m est 0, comprend en plus un groupe alcoxy en C₄-C₃₆ ou phénylalcoxy en C₇-C₁₈, qui est respectivement non substitué ou substitué sur le noyau phényle par 1 à 3 groupes alkyle en C₁-C₄; cycloalcoxy en C₅-C₉; phényloxy, qui est non substitué ou substitué par 1 à 3 groupes alkyle en C₁-C₄; et
R⁵ représente un groupe alkyle en C₆-C₃₆; alkyle en C₆-C₃₆ interrompu par -O-; cycloalkyle en C₅-C₉; phényle; phénylalkyle en C₇-C₃₆; ou phénylalkyle en C₇-C₃₆, qui est interrompu dans la partie aliphatique par -O-.

5. Polyéther selon la revendication 4, dans lequel m est 0; et
R⁵ représente un groupe alkyle en C₆-C₁₈; cycloalkyle en C₅-C₉; phényle; ou phénylalkyle en C₇-C₉.

6. Polyéther selon la revendication 5 constitué de motifs récurrents de formule I.

7. Composition contenant (a) un matériau organique sensible vis à vis de la détérioration par la lumière, l'oxygène et/ou la chaleur et (b) un polyéther contenant des motifs récurrents de formule I selon la revendication 1 comme stabilisant.

8. Composition selon la revendication 7, dans laquelle le composant (a) est un polymère organique.

9. Composition selon la revendication 7, dans laquelle le composant (a) est une polyoléfine, un matériau photographique ou un liant de peinture à base de résine acrylique, alkyde, polyuréthanne, polyester ou polyamide ou de résines correspondantes modifiées

10. Composition selon la revendication 7, contenant en plus des composants (a) et (b) un additif conventionnel.

11. Composition selon la revendication 7 contenant 0,01 à 10% en poids du composant (b), par rapport au poids de la composition.

12. Procédé de stabilisation de polymères organiques contre la détérioration par la lumière, l'oxygène et/ou la chaleur, caractérisé en ce qu'on mélange aux polymères un polyéther contenant des motifs récurrents de formule I selon la revendication 1 comme stabilisant.

13. Utilisation de polyéthers contenant des motifs récurrents de formule I selon la revendication 1 pour stabiliser un matériau organique contre la détérioration par la lumière, l'oxygène et/ou la chaleur.
